# EUROPEAN PATENT SPECIFICATION

(11) **EP 4 222 226 B1**
(45) Date of publication and mention of the grant of the patent: **02.12.2026**
(21) Application number: 21835354.8
(22) Date of filing: 16.12.2021
(51) Int. Cl.: C09D 11/106, C09D 11/107, C09D 11/322, C09D 11/326, D06P 5/30

(54) **WATER-BASED PIGMENT INKS FOR TEXTILES**
WÄSSRIGE PIGMENTTINTEN FÜR TEXTILIEN
ENCRES PIGMENTAIRES À BASE D'EAU POUR TEXTILES

(30) Priority: 18.12.2020 US 202063127295 P; 27.01.2021 US 202163142101 P
(43) Date of publication of application: 09.08.2023
(73) Proprietor: Sun Chemical Corporation, Parsippany, NJ 07054 (US)
(72) Inventor: MATTHEWS, James, South Normanton Derbyshire DE55 2DT (GB); WALLACE, Paul, South Normanton Derbyshire DE55 2DT (GB)
(74) Representative: Carpmaels & Ransford LLP
(86) International application number: PCT/GB2021/053323
(87) International publication number: WO 2022/129917

(56) References cited:
- WO-A1-2019/203784
- CN-A- 111 393 569
- GB-A- 2 562 311
- JP-A- 2002 121 438
- JP-A- 2005 041 992
- JP-A- 2006 225 564
- JP-A- H11 140 365
- US-A1- 2005 206 703
- US-A1- 2006 014 856
- US-A1- 2018 362 787

## Description

The present invention relates to a method of printing an image on a fibrous substrate (e.g., a textile) by inkjet printing comprising applying a water-based ink composition onto the substrate. The present invention also relates to the use of a water-based ink composition for printing an image on a fibrous substrate (e.g., a textile) by inkjet printing.

Decoration of fibrous substrates by inkjet printing is difficult to achieve without the need for complex inks and processes. The challenges facing this sector are to combine the performance of the decorated article, such as excellent wash, rub and crock fastness, whilst retaining the soft hand of the fabric. Furthermore, many pigmented inks pose major challenges in that they require good jetting and printed image quality, excellent ink storage stability, long open time, excellent resolubility and good printer maintenance. Furthermore, typically complex chemical pre-treatments and ink binders are needed to enable printing onto fibrous substrates such as leather, wallpaper, polyester, PET, silk, rayon, fiberboard and cardboard.

There are many current challenges with the future generations of water-based pigment inks for printing onto non-porous (and also porous) substrates. The challenges are both physical, chemical and physico-chemical. From the perspective of the printing press and printer maintenance, the inks must give excellent jetting performance from the print heads; long open times (in the event the printing heads are not capped appropriately) which have a quick start-up; good resolubility in the case that inks are left to dry in the machine and the machine can be flushed and recovered; and do not settle during operation of the printer when ink re-circulating systems are being used. In terms of the ink and the substrate interactions, the inks must bind well to the substrates, preferably without the need for chemical pre-treatments or chemical primers (it is common practice in the inkjet industry for most substrates to be "de-greased" prior to printing using a corona treatment on-line or off-line). The color of the inks must be vibrant, and the inks when bound to the surface must be able to withstand a multitude of physical tests such as adhesion, scratch resistance, alcohol rub resistance, water resistance and crinkling/warping tests. Furthermore, the inks should preferably be capable of printing on the top of base color coats, have top color coats printed on top of them and be able to withstand various textile lamination processes.

Water-based pigmented ink formulations that can be used for inkjet printing directly onto fibrous substrates (such as textiles) and that display a trade-off with all the necessary parameters discussed above that are required from a high-performing ink in the industrial inkjet textile sector are not known in the art.

US6838521B2 (Sejong University) refers to polymer materials, containing tri-random co-polymers of poly(styrene-acrylic acid), poly(styrene-maleic anhydride) and poly(vinylpyrrolidinone) that can be synthesised and used as a dispersant for inkjet inks. The synthesis of such tri-random co-polymers is complex and costly and the manufacture of inkjet inks in this patent required removal of large particles (presumably insoluble polymers or pigment aggregates) by filtration. There is no evidence in the patent that incorporation of such tri-random co-polymers into inkjet inks to provide any advantages over the known art. Furthermore, the ink formulations which are exemplified in US6838521B2 are complex, and the binding behaviour of the inks on industrial substrates is not disclosed. Also, the patent is essentially at least three steps, which involves the condensation of poly(maleic anhydride) with at least two other co-polymers, then a milling step to use the tri-random co-polymer as dispersant and finally an ink letdown stage.

JP4126589B2 (Toda Kogyo Corporation) refers to carbon black particles, dispersions and inks which are prepared from a dispersion containing a di-block co-polymer. This polymer is made from poly(acrylic acid) and poly(styrene-maleic acid). Again, the process to make the inks and polymers is laborious and furthermore the ink formulations derived from this patent are only used for printing onto porous papers for small office, home office (SOHO) use. There is no extension of the use of this co-polymer to organic pigments (for example, pigment blue 15) which would indicate that the dispersions and inks derived from the patent are only matched with the dispersant when used with specific grades of the inorganic pigment carbon black.

JP6089915B2 (Toyo Ink) refers to a series of white inkjet ink formulations based exclusively on the inorganic pigment titanium dioxide (TiO₂). The dispersants cited are prepared from reacting an alpha-olefin with maleic acid or maleic anhydride. Styrene is not mentioned in this patent and there is no teaching about the potential prospect of using styrene-maleic acid as a dispersant, surfactant and binding polymer in an ink. Furthermore, JP6089915B2 is limited to white TiO₂-based inks only.

US10106696B2 (Cabot Corporation) refers to inkjet inks for the inorganic pigment carbon black (specifically furnace black) which contain a polymeric dispersant which can be styrene-maleic acid co-polymer and additionally at least a polyurethane binder and a surfactant. The patent is concerned with carbon black inks for printing onto paper only. It teaches that different types of carbon black pigments can be incorporated into inkjet inks using these types of formulations. In the current invention, the combination of a styrene-maleic acid co-polymer in combination with a polyurethane polymer binder is not required.

JP10330663A (Fujitsu) refers to a carbon black inkjet ink for printing onto paper. An anionic acrylic polymer which has a pH>7, a surface tension <50 dyne/cm and a Mw of <80,000 Daltons is described. In an example, a carbon black ink is prepared from maleic acid-styrene copolymer, carbon black, a defoaming agent, water and diethylene glycol. This ink is directed at printing onto absorbent substrates, specifically paper, which do not need a binder. Furthermore, JP10330663Ais concerned with inks for filling cartridges for SOHO use, not industrial use.

KR20020053332A (Cheil Industries); JP5144951B2 (The Inctec Inc.); US6136890A (Minnesota Mining & Manufacturing Co.); EP3380572B2 (Eastman Kodak); JP2012036287A (Ricoh); EP3063238B1 (DuPont); EP1396527B1 (Seiko-Epson); US8153706B2 (HP); US8946320B2 (HP); and JP4608854B2 (DIC) also relate to ink compositions comprising acid functional co-polymers.

JP 2006/225564A (Sony Corp) relates to a recording liquid comprising a pigment, a water-soluble resin and a solvent containing water and a water-soluble organic solvent, wherein the water-soluble resin is at least one of a monovalent alkali metal salt of a styrene-maleic acid copolymer and a monovalent alkali metal salt of a styrene-maleic acid-alkyl acrylate copolymer, and is contained in 0.3-2.0 times as much as the the pigment; and the water-soluble organic solvent is a dihydric alcoholic solvent without at least an ether bond, and is contained in 5%-20% by weight.

JP H11/140365A (Orient Chemical Ind) relates to an aqueous ink composition comprising an alkylenebismelamine derivative as an organic white pigment and an ammonium salt of a water-soluble resin for dispersing the pigment.

JP 2002/121438A (Fuji Xerox Co Ltd.) relates to a water-based ink set comprising a colourless or light coloured solution and an ink material containing one or more inks, wherein the colourless or light coloured solution contains at least a water-soluble organic solvent and water.

US 2005/206703A1 (HP) relates to an inkjet ink composition including a jettable vehicle, a plurality of pigment solids dispersed in the jettable vehicle, and a half-ester of styrene maleic anhydride (SMA) dispersed in the jettable vehicle. US 2006/014856A1 (HP) also relates to an ink including a jettable vehicle, a plurality of pigment solids dispersed in the jettable vehicle, and a styrene-maleimide copolymer dispersed in the jettable vehicle.

JP 2005/041992A (Dainippon Ink & Chemicals) relates to a method of producing a pigment dispersion, said method comprising (1) a first step of neutralizing with a base a part or all of acid groups in a resin which has a weight average molecular weight (Mw) in the range of 9,000-80,000 and has acid groups and then emulsifying or suspending the resin into an aqueous medium to obtain a resin dispersion having an average particle size of the resin in the range of 0.01-1 µm; (2) a second step of adding a pigment to the resin obtained in the first step and then grinding the mixture; and (3) a third step of further finely-dividing the ground matter obtained in the second step with a homogenizer.

GB 2,562,311A (Domino Printing Sciences plc) relates to an ink composition containing volatile organic solvent(s), colorant(s), and at least 1.5 wt.% binder resin comprising polymer(s) and a metal crosslinker, wherein the polymer(s) have coordinating groups for crosslinking with the metal crosslinker.

CN 111393569A (Jiaxing Huawen Chemical Co Ltd) relates to the preparation of a styrene maleic amic acid copolymer that at least comprises the following steps: (1) preparing maleic amic acid; (2) preparing the styrene maleic amic acid copolymer; and (3) performing purification treatment.

WO 2019/203784A1 (HP) relates to an ink composition having a pH from pH 7 to pH 10 and a crosslinker composition having a basic pH from pH 8 to pH 10, wherein the ink composition can include from 60 wt% to 90 wt% water, from 5 wt% to 30 wt% organic co-solvent, from 1 wt% to 6 wt% pigment, and a latex polymer including an aromatic (meth)acrylate moiety.

US 2018/362787A1 (Kyocera Document Solutions Inc.) relates to a transfer-printing ink comprising: a pigment; an anionic fixing resin; and a volatile amine as a neutralizer for neutralizing the fixing resin, wherein an average particle diameter of the pigment is 30 nm to 150 nm, a mass ratio of the pigment to the fixing resin is 1:1 to 1:5, an added amount of the volatile amine is 0.8 to 1.5 times a neutralization equivalent, and the ink is ejected onto a transfer paper base on an inkjet recording device when transfer paper is prepared, and the ink is transferred from the transfer paper to cloth when the transfer paper with the cloth laid thereover is heated.

It is an object of the present invention to address one or more of the problems mentioned above. In particular, it is an object of the present invention to provide a water-based pigmented ink formulation that can be used for inkjet printing onto fibrous substrates such as textiles and which displays the characteristics required for a high-performing ink in the industrial inkjet sector, including good jetting and printed image quality, excellent ink storage stability, long open time, excellent resolubility and good printer maintenance. The inks of the present invention can leverage the same base dispersion technologies and be converted to inks with slightly different physical properties to cover most of the demands from the industrial textile inkjet printing market. The inks are suitable for printing directly onto substrates which do not have a chemical pre-treatment. Alternatively, where a chemical pre-treatment is used, the inks demonstrate an equally good printing performance.

### DETAILED DESCRIPTION

The inventors have developed a series of ink formulations using water- and solvent-water-insoluble pigments (i.e. pigments that are insoluble in a blend of solvent and water), based on a single carboxylic acid functional polymer type selected from a poly(styrene-maleic acid) co-polymer and/or poly(styrene-maleamic acid) co-polymer) as a dispersant, surfactant and binder to formulate a pigmented ink set that can be used for inkjet printing onto fibrous substrates, wherein the fibrous substrate is a textile. Furthermore, in preferred aspects of the present invention, chemical pre-treatment of the textile substrate is not required, which is unexpected for such water-based inks when printing on fibrous substrates, wherein the fibrous substrate is a textile. A second polymer which is not the same as the first polymer can optionally be used to help with viscoelastic properties of the inks and binding to the substrates. These second polymers are preferably selected from the list comprising polyacrylic acids, polyvinyl alcohols, polyesters, polyestermelamines, styrene/acrylic acid copolymers, styrene/maleic acid/alkyl acrylate copolymers, styrene/methacrylic acid copolymers, styrene/methacrylic acid/alkyl acrylate copolymers, styrene/maleic half ester copolymers, vinyl naphthalene/acrylic acid copolymers, vinyl naphthalene/maleic acid copolymers, and salts thereof, among others. Surprisingly, using a single type of acid-functional polymer (a single poly(styrene-maleic acid) co-polymer and/or poly(styrene-maleamic acid) co-polymer) as the dispersant, binder and surfactant, produced ink films which were durable, with good colour intensity and a host of other attributes.

As used herein, the term "single polymer type" means all the polymers in the ink belong to the same class, e.g., they are all poly(styrene-maleic acid) co-polymers and/or poly(styrene-maleamic acid) co-polymers as defined herein. Preferably, no additional polymer types (e.g., a polyurethane) are required in the ink used in the present invention. As defined herein, poly(styrene-maleic acid) co-polymers and poly(styrene-maleamic acid) co-polymers belong to the same class, i.e., together they are a single polymer type.

Preferably, the inks used in the present invention are water-based and can be printed onto a diverse number of different fibrous textile substrates directly. Indeed, it is highly unexpected that the inks could be printed directly a non-treated woven plastic substrate such as polyester or PET while providing a good, durable image. Furthermore, reliability in the printing press is important. The inks used in the present invention preferably display excellent re-solubility and open time, meaning the printing press can be used for longer periods without any need for preventative maintenance. Finally, the wash, crock and rub fastness of the cured films is preferably good and the fabrics remain soft to the touch.

Preferably, the substrate used in the present invention does not contain a chemical primer or chemical pre-treatment layer on its surface, and so the ink is printed directly onto the substrate. As will be understood in the art, a chemical primer layer is an intermediary layer between the substrate and the ink that facilitates adhesion between the substrate and the ink. Similarly, it will be understood in the art that chemical pre-treatment of a substrate involves applying a chemical substance to the substrate before printing which binds to the substrate and which facilitates adhesion between the substrate and the ink.

As will be understood in the art, a chemical primer or chemical pre-treatment is distinct from a physical pre-treatment of the substrate. Accordingly, the substrate suitable for use in the present invention may be subjected to a physical pre-treatment prior to being printed, for example a plasma pre-treatment.

The present invention provides a method of printing an image on a fibrous substrate by inkjet printing, wherein the method comprises applying a water-based ink composition onto the substrate, wherein the ink composition comprises a carboxylic acid functional co-polymer having an acid number of ≥ 225 mg KOH/g, a pigment, water and at least one organic co-solvent, wherein the carboxylic acid functional co-polymer is a poly(styrene-maleic acid) co-polymer and/or a poly(styrene-maleamic acid) co-polymer, and wherein the fibrous substrate is a textile.

The present invention also provides use of a water-based ink composition for printing an image on a fibrous substrate by inkjet printing, wherein the ink composition comprises a carboxylic acid functional co-polymer having an acid number of ≥ 225 mg KOH/g, a pigment, water and at least one organic co-solvent wherein the carboxylic acid functional co-polymer is a poly(styrene-maleic acid) co-polymer and/or a poly(styrene-maleamic acid) co-polymer, and wherein the fibrous substrate is a textile.

As used herein, carboxylic acid functional co-polymers include co-polymers having both acid and amide functional groups, e.g., poly(styrene-maleamic acid) co-polymers.

Using a single carboxylic acid functional polymer, selected from a poly(styrene-maleic acid) co-polymer and/or poly(styrene-maleamic acid) co-polymer), as the dispersant, surfactant and binder in a digital ink is not known in the art. Surprisingly, only very small quantities of the polymer (such as 0.01 to 10% by weight, preferably 0.1 to 5% by weight) are required in an ink to impart the stability, jetting and physical properties of the ink films when cured. Indeed, only 0.5% w/w of active polymer in the ink was found to give acceptable properties (e.g. resolubility and open time). This is particularly surprising given the high degree of fixation which the printed and cured ink films displayed.

Preferably, the carboxylic acid functional co-polymer used in the present invention is a solution-soluble co-polymer. As is understood in the art, the term "solution-soluble" co-polymer (e.g., a solution-soluble poly(styrene-maleic acid) co-polymer, and also known as an alkali-soluble polymer or a solution-polymer) typically refers to co-polymers that comprise acidic groups (including acid derivatives such as anhydrides) as part of the monomer blend. When the acidic groups of the polymer are neutralized with a base the polymers can then be dissolved in water to form an aqueous solution.

Preferably, the methods and uses according to the present invention do not require a chemical primer layer or chemical pre-treatment on the substrate prior to inkjet printing.

The inks used in the present invention have good resolubility and good film forming properties despite there being no requirement for a crosslinker or second polymer type in the ink.

Described herein is a method for preparing the water-based ink described herein, comprising the steps of:
i. Preparing a pigment dispersion by mixing a pigment powder together with at least poly(styrene-maleic acid) or other acid functional polymer as a dispersant, deionised water, and milling the slurry until the required particle size is obtained; the individual pigment or colorant dispersions can be subjected to milling to liberate a pigment or colorant dispersion which is stable and the pigment particles having an average particle size (Z-average) of between 100nm and 250nm, as determined by ISO 13320:2009(E); and
ii. Adding water, an organic solvent and optionally additional other chemical agents to said dispersions, thereby obtaining water-based inks.

The present invention also provides a method for the decoration of a fibrous substrate, that is a textile, by contacting a substrate with the water-based ink described herein and subsequently fixing the said water-based ink onto said substrate using NIR radiation.

Described herein is a method for printing a variety of different fibrous substrates, comprising the steps of:
i. Applying the water-based ink described herein onto the substrate; and
ii. Fixation of said water-based ink onto said substrate using NIR-radiation or thermal curing or directed air drying or steaming or a heat press.

The present invention also provides a decorated fibrous substrate which is prepared by the method of the invention, preferably wherein the decorated substrate is formed from the deposition of an ink incorporating a poly(styrene-maleic acid) co-polymer and/or a poly(styrene-maleamic acid) co-polymer, whereby said substrate can be printed with at least one or more inks and cured by either a serial arrangement of NIR lamps or thermally cured using a thermal heating device.

### Ink Additives

The polymeric dispersing agent used in the present invention is a poly(styrene-maleic acid) and/or poly(styrene-maleamic acid) co-polymer (which belong to the same polymeric class).

As will be understood in the art, poly(styrene-maleic acid) co-polymers comprise styrenic and maleic acid repeating units. Similarly, poly(styrene-maleamic acid) co-polymers comprise styrenic and maleamic acid repeating units. As will be further understood in the art, the acidic groups in maleic acid and maleamic acid can form salts with an appropriate neutralizing agent.

Preferably, the maleic acid or maleamic acid repeating unit in the co-polymer is a mono-sodium salt, a di-sodium salt, a mono-ammonium salt, a di-ammonium salt, a mono-quaternary ammonium salt or a di-quaternary ammonium salt.

Preferably, the poly(styrene-maleic acid) co-polymer or poly(styrene-maleamic acid) co-polymer is selected from a di-sodium salt of poly(styrene-maleic acid) co-polymer, a di-ammonium salt of poly(styrene-maleic acid) co-polymer, a mono-ammonium salt of poly(styrene-maleamic acid) co-polymer, a mono-quaternary ammonium salt of poly(styrene-maleamic acid) co-polymer or combinations thereof.

Preferably, the poly(styrene-maleic acid) co-polymer and poly(styrene-maleamic acid) co-polymer used in the present invention do not contain any maleic anhydride residues.

Preferably, the poly(styrene-maleic acid) co-polymer and poly(styrene-maleamic acid) co-polymer do not contain any maleic ester residues.

Preferably, the poly(styrene-maleic acid) co-polymer and poly(styrene-maleamic acid) co-polymer comprise 5 to 50% by weight, preferably 15 to 40 % by weight maleic acid or maleamic acid content.

Examples of suitable poly(styrene-maleic acid) co-polymers and poly(styrene-maleamic acid) co-polymers include, but are not limited to poly(styrene-alt-maleic acid) sodium salt solution from Merck, SMA 1000 H, SMA 1000HNa, SMA 2000H, SMA 2000HNa, SMA 3000H, SMA 3000HNa, SMA 1000 AMP, SMA 2000 AMP and SMA 3000 AMP from Polyscope Polymers. Further examples of suitable poly(styrene-maleic acid) co-polymers and poly(styrene-maleamic acid) co-polymers include Xiran 3000 HNa, Xiran 1000A, Xiran 2000A, Xiran 1550H and Xiran 3000H from Polyscope Polymers.

Preferably, the ink compositions comprise the carboxylic acid functional co-polymer in an amount of 0.01 to 10% by weight, preferably 0.1 to 5% by weight, more preferably 0.5 to 3.5% by weight of the composition.

Preferably, the carboxylic acid functional co-polymer used in the present invention has a molecular weight of ≥ 3,000 Daltons, preferable ≥ 3,500 Daltons. Preferably, the carboxylic acid functional co-polymer used in the present invention has a molecular weight of 3,000-20,000 Daltons, preferably 3,500-15,000 Daltons.

The ink compositions used in the present invention may be, though are not limited to, inkjet ink compositions that can optionally include one or more additives that are compatible with the other components of the composition. Additives can be included in the composition to impart any number of desired properties, including, but not limited to, stability, smear resistance, viscosity, surface tension, coating penetration, optical density, color depth, adhesion, highlighter resistance, resolubility and crust resistance, among others. Suitable additives for such uses and the amounts of such additives used are known and conventionally used in the art.

Examples of additives include, but are not limited to, defoamers, preservatives, surfactants, pH modifiers, viscosity modifiers, humectants, penetrating agents, and additional polymers, among others.

Defoamers can optionally be included in the ink composition to inhibit the formation of foam. Examples of suitable defoamers include, but are not limited to, silicone-based or non-silicone defoamers. Commercially available defoamers include, but are not limited to, Dow Coming^{®} 71 and Dow Coming^{®} 74 (from Dow Corning), TegoAirex^{®} 901W, 902W, 904W from Evonik Industries/ Tega, Tergitol^{®} L-61, L-62, L-64 and L-101 (from Dow Chemical). A typical amount (by weight) of defoamer included in the composition is 0.1 to 3% by weight.

Preservatives, such as biocides and fungicides, can optionally be included in the ink composition to inhibit the growth of microorganisms. Examples of suitable preservatives include, but are not limited to, sodium benzoate, pentachlorophenol sodium, 2-pyridinethiol-1-oxide sodium, sodium sorbate, sodium dehydroacetate, benzisothiazolinone, 1,2-dibenzothiazolin-3-one, 1-(3-chlorallyl)-3,5,7-triaza-1 azoniaadamantane chloride (CTAC), methylisothiazolinone, and chloromethylisothiazolinone, among others. Commercially available biocides include UCARCIDE^{®} 250 (available from Union Carbide Company), Proxel^{®} CRL, Proxel^{®} BDN, Proxel^{®} GXL, Proxel^{®}XL-2, Proxel^{®} TN (available from Arch Chemicals, Smyrna, Ga.), Dowicil^{®} (Dow Chemical, Midland, Mich.), Nuosept^{®} (Huls America, Inc., Piscataway, N.J.), Omidines^{®} (Olin Corp., Cheshire, Conn.), Nopcocides^{®} (Henkel Corp., Ambler, Pa.), Troysans^{®} (Troy Chemical Corp., Newark, N.J.), and XBINX^{®} (PMC Specialties Group, Inc., Cincinnati, Ohio). Agitan 731 biocide and Acticide M10 biocide may also be used. The preservatives may be used alone or in combination. A typical amount (by weight) of preservative included in the composition is 0.05 to 2% by weight, preferably 0.1 to 1.5% by weight.

Additional surfactants can optionally be included to reduce surface tension of the ink composition. The additional surfactant can be an anionic surfactant, non-ionic surfactant or cationic surfactant. Suitable additional surfactants can include, but are not limited to, those listed below and in US. Pat. No. 5,116,409, US. Pat. No. 5,861,447 and US. Pat. No. 6,849,111. Exemplary additional surfactants are commercially available under various trade names, such as the PLURONIC^{®} series (BASF Corporation, Parsippany, N.J.), TETRONIC^{®} series (BASF Corporation, Parsippany, N.J.), ARQUAD^{®} series (Akzo Chemical Inc., Chicago, Ill.), TRITON^{®} series (Union Carbide Corp., Danbury, Conn.), SURFONIC^{®} series (Texaco Chemical Company, Houston, Tex.), ETHOQUAD^{®} series (Akzo Chemical Inc., Chicago, Ill.), ARMEEN^{®} series (Akzo Chemical Inc., Chicago, Ill.), ICONOL^{®} series (BASF Corporation, Parsippany, N.J.), SURFYNOL^{®} series (Air Products and Chemicals, Inc. Allentown, Pa.), and ETHOMEEN^{®} series (Akzo Chemical Inc., Chicago, Ill.), among others. The additional surfactants can be used alone or in combination. A typical amount (by weight) of surfactant included in the composition is 0.1 to 10% by weight.

As used herein a surfactant is an agent that lowers the surface tension between two substances (e.g., two liquids, a gas and a liquid or a liquid and a solid), whereas a wetting agent lowers the interfacial tension of water allowing it to spread on a solid surface. Preferably, the ink composition does not comprise any additional surfactants (i.e., other than the poly(styrene-maleic acid) or poly(styrene-maleamic acid) co-polymer) but may comprise a wetting agent, for example a polyether siloxane co-polymer such as Tego Wet KL 245 (Evonik).

pH modifiers can optionally be included to adjust or buffer the ink composition to a desired pH. Suitable pH modifiers include, but are not limited to, alkali hydroxides, alkali carbonates and bicarbonates, triethylamine, dimethylethanolamine, triethanolamine, mineral acids, hydrochloric acid, and sulfuric acid, among others. The pH modifiers can be used alone or in combination. A typical amount (by weight) of pH modifier in the composition is 0.1 to 2% by weight.

The ink composition can optionally include one or more viscosity modifiers. Examples of suitable viscosity modifiers include, but are not limited to, resin compounds, alginic acid compounds, polyvinyl alcohol, hydroxypropyl cellulose, carboxymethyl cellulose, hydroxyethyl cellulose, methyl cellulose, salts of polyacrylic acid, polyvinyl pyrrolidone, gum arabic and starch, hydrophobic ethoxylated urethanes (HEURs), hydrophobically modified alkali swellable emulsions (HASEs), alkali swellable emulsions (ASEs), among others. The viscosity modifiers can be used alone or in combination. A typical amount (by weight) of viscosity modifier in the composition is 0.5 to 10% by weight.

In addition to an organic co-solvent of the fluid carrier component which can function as a humectant, one or more additional humectants can be optionally included in the inkjet ink composition to reduce the rate of evaporation of the water component and prevent an ink composition from drying out in the nozzles of the printhead, which can occur during periods of latency, to minimize clogging of the nozzles. Humectants can be selected from materials having high hygroscopicity and water-solubility. Examples of suitable humectants include, but are not limited to, polyols (e.g., ethylene glycol, monopropylene glycol, dipropylene glycol), alcohol ethers (e.g., diethylene glycol, triethylene glycol), lactams (e.g., 2-pyrrolidone, urea compounds such as urea, 1,3-dimethylimidazolidinone), saccharides (e.g., sorbitol), 1,4-cyclohexanedimethanol, 1-methyl-2-piperidone, N-ethylacetamide, 3-amino-1,2-propanediol, ethylene carbonate; butyrolacetone and Liponic EG-1, among others. There are no particular limitations on the amount used of the humectant. A typical amount (by weight) of humectant in the composition is 0.5 to 30% by weight.

Penetrating agents can optionally be included to reduce bleeding of an ink composition when applied to a print substrate such as paper, among others. Examples of suitable penetrating agents include, but are not limited to, alkyl alcohols having 1 to 4 carbon atoms (e.g., ethanol), glycol ethers (e.g., ethylene glycol monomethyl ether), diols (e.g., 1,2-alkyl diols), formamide, acetamide, dimethylsulfoxide, sorbitol and sulfolane, among others. The penetrating agents may be used alone or in combination. A typical amount (by weight) of penetrating agents in the composition is 1 to 20% by weight.

The ink compositions used according to the present invention are advantageous in that a single polymer selected from a poly(styrene-maleic acid) co-polymer or poly(styrene-maleamic acid) co-polymer can function as the dispersant, surfactant and binder. Accordingly, no additional polymers are required in the ink composition used in the present invention. Nonetheless, the ink composition can optionally include additional polymers (other than the acid-functional co-polymer e.g., water-soluble poly(styrene-maleic acid) co-polymer) to enhance water-fastness, rub and light fastness of an ink image applied to and dried on a print substrate. Examples of such polymers include, but are not limited to, polyvinyl alcohols, polyesters, polyestermelamines, styrene/acrylic acid copolymers, styrene/maleic acid/alkyl acrylate copolymers, styrene/methacrylic acid copolymers, styrene/methacrylic acid/alkyl acrylate copolymers, styrene/maleic half ester copolymers, vinyl naphthalene/acrylic acid copolymers, vinyl naphthalene/maleic acid copolymers, and salts thereof, among others. Such additional polymers can be used alone or in combination. A typical amount (by weight) of such additional polymers that can be included in the composition is 0.1 to 20% by weight.

Preferably, the printing ink used in the present invention do not include a polyurethane polymer.

The ink composition can optionally include a self-crosslinking polymer to improve the durability of an ink image applied to and dried on a print substrate. Examples of such self-crosslinking polymers for use in the ink compositions include, but are not limited to, self-cross-linking acrylic polymers, styrene-acrylic copolymers, styrene-butadiene latexes, styrene-isoprene latexes, acrylonitrile-butadiene latexes, alkyd dispersions, vinyl polymers, silicone dispersions, polyamide dispersions, chlorinated olefin dispersions, and polyester dispersions, among other self-crosslinking polymers. Such self-crosslinking polymers can be used alone or in combination. A typical amount (by weight) of such self-crosslinking polymers that can be included in the composition is 0.1 to 20% by weight, preferably 1 to 15% by weight.

Other additives that can be included in the ink compositions include, but are not limited to, antioxidants, ultraviolet absorbers, chelating agents, electric conductivity adjusters, oxygen absorbers, anti-kogation agents, anti-curling agents, and fragrances, among others. The amounts of such additives for use in aqueous inkjet ink compositions are known and conventionally used in the art.

### Colorants

Suitable colorants that can be used in the ink composition used in the invention include any inorganic and organic pigments and lake dispersions. Pigments refer to a colorant particle that is typically water insoluble. As used herein water- and/or water-solvent-insoluble pigments are insoluble at 25°C.

Suitable pigments that can be used to form the ink compositions disclosed herein may include any organic or inorganic pigment known in the art, including, but not limited to, black, yellow, orange, brown, red, violet, blue, green, fluorescent, metal powder and polymer bond pigments. Pigments also may include, but are not limited to, carbon black, azo pigments, phthalocyanine pigments, anthraquinone pigments, perylene and perynone pigments, polycyclic pigments, naphthol pigments, anthrapyrimidone pigments, quinacridone pigments, anthanthrone pigments, flavanthrone pigments, thioindigo pigments, dioxazine pigments, isoindoline and isoindolinone pigments, quinophthalone pigments, azine pigments, nitroso pigments, nitro pigments, triphenylmethane lake pigments, ovaine lake pigments, metal complex pigments, natural pigments, and inorganic pigments, among others. The pigment particles should be sufficiently small (i.e., have an average particle size of from 100 nm to 250 nm) to permit free flow of the ink through the ejecting nozzle of an inkjet printing device.

Suitable colored pigments can include, for example, yellow pigments such as C. l. Pigment Yellow 1, 2, 3, 4, 5, 6, 10, 12, 13, 14, 16, 17,24, 55, 61, 65, 73, 74, 81, 83, 93, 94, 95, 97, 99, 100, 108, 109, 110, 117, 120, 123, 124, 128, 129, 133, 138, 139, 147, 150, 151, 153, 154, 155, 156, 167, 168, 172, 173, 174, 175, 176, 177, 179, 180, 181, 182, 183, 184, 185, 187, 188, 190, 191, 192, 193, and 194 among others; red pigments such as, C. l. Pigment Red 1, 2, 3, 4, 5, 6, 7, 8, 9, 10, 11, 12, 13, 14, 15, 16, 17, 18, 19, 21, 22, 23, 30, 31, 32, 37, 38, 39, 40, 48, 49, 50, 51, 52, 53, 55, 60, 64, 68, 81, 83, 87, 88, 89, 90, 95, 112, 114, 119, 122, 123, 136, 144, 146, 147, 148, 149, 150, 151, 163, 164, 166, 168, 169, 170, 161, 172, 175, 176, 202, 204, 206, 207, 210, 211, 212, 213, 214, 216, 220, 222, 237, 238, 239, 240, 242, 243, 245, 247, 248, 251, 252, 253, 254, 255, 256, 258, 261, and 264 among others; violet pigments such as C. l. Pigment Violet 1, 2, 3, 5, 13, 19, 23, 25, 27, 29, 31, 32, 37, 39, 42, 44, and 50 among others; blue pigments such as C. l. Pigment Blue 1, 2, 3, 9, 10, 14, 15, 16, 18, 19, 21, 22, 24, 25, 56, 60, 61, 62, 63, 64, 65, and 66, among others; orange pigments such as C. l. Pigment Orange 1, 2, 5, 6, 7, 13, 14, 15, 16, 17, 19, 22, 24, 31, 34, 36, 38, 40, 42, 43, 44, 46, 48, 49, 51, 59, 60, 61, 62, 63, 64, 65, 66, 67, 68, and 69 among others; green pigments such as C. l. Pigment Green 1, 2, 4, 7, 8, 10, 34, 36, 45, and 47, among others; brown pigments such as C. l. Pigment Brown 1, 2, 3, 5, 22, 23, 25, 26, 32, 38, 41, and 42 among others; black pigments such as C. l. Pigment Black 1, 7, 20, 31, and 32 among others, and white pigments such as titanium dioxide. Commercially available colored pigments may include, for example, Pigment Red 122 and Pigment Violet 19 (available from Lansco Colors, Montvale, NJ. or BASF Color, Charlotte, NC. or Clariant Colors, Charlotte, NC. or Sun Chemical, Cincinnati, Ohio), Pigment Blue 15:1 (available from Fanwood Chemical, Fanwood, N.J.), Pigment Blue 15:3, Pigment 15:4, Pigment Yellow 74 and Pigment Yellow 97 (available from BASF Color, Charlotte, NC. or Clariant Colors, Charlotte, NC. or Sun Chemical, Cincinnati, Ohio), among others. Other suitable pigments may include, but are not limited to Disperse Blue 14, Disperse Blue 19, Disperse Blue 72, Disperse Blue 334, Disperse Blue 359, Disperse Blue 360, Disperse Orange 25, Disperse Yellow 54, Disperse Yellow 64, Disperse Red 55, Disperse Red 60, Macrolex Red H, Disperse Brown 27, Solvent Blue 67, Solvent Blue 70, Solvent Red 49, Solvent Red 146, Solvent Red 160, Solvent Yellow 162, Solvent Violet 10, and Solvent Black 29, among others.

Suitable pigments can also include carbon black, which is the generic name for carbon particles derived from the thermal decomposition or the incomplete combustion of natural gas and hydrocarbons, such as aromatic oils on coal tar basis, mineral oils, coal tar distillate, and acetylene. More than 100 individual grades of carbon black are available on the market today, each with its own distinctive set of characteristics and properties. Any acidic carbon black, neutral carbon black and alkaline carbon black can be used. This includes channel blacks, gas blacks, lamp blacks, thermal blacks, acetylene blacks and furnace blacks. More particularly, suitable carbon blacks include channel blacks. Examples of commercially available carbon blacks include, but are not limited to, those available from Cabot (Elftex 8, Black Pearls^{®} 490, Black Pearls^{®} 120, Monarch^{®} 120, Monarch^{®} 700, Monarch^{®} 880, Monarch^{®} 1000, Monarch^{®} 1100, Monarch^{®} 1300, Monarch^{®} 1400, Mogul^{®} L, Regal^{®} 99R, Regal^{®} 250R, Regal^{®} 300R, Regal^{®} 330R, Regal^{®} 400R, Regal^{®} 500R, Regal^{®} 660R, Cab-O-Jet^{®} 200, Cab-O-Jet^{®} 300, and Cab-O-Jet^{®} 400), Degussa/Orion Carbon (NlPex^{®} 150 IQ, NlPex^{®} 150, Printex^{®} 55, Printex^{®} 80, Printex^{®} 90, Printex^{®} A, Printex^{®} G, Printex^{®} U, Printex^{®} V, Printex^{®} 140U, Printex^{®} 140V, Purex^{®} LS 35, Corax^{®} HP 160, Thermal Black N 990, NlPex^{®} 160 IQ, Nipex^{®} 1701Q, Nipex^{®} 1801Q, NlPex^{®} 90, Special black 4, Special black 4A, Special black 5, Special black 6, Special black 100, Special black 250, Color black FWl, Color black FW2, Color black FW2V, Color black FW18, Color black FW200, Color black $150, Color black $160 and Color black S170), Columbian/Birla Carbon (Raven^{®} 780, Raven^{®} 5000 Ull, Raven^{®} 1255, Raven^{®} 2500 U, Raven^{®} 3600 U, Raven^{®} 3500, Raven^{®} 5000, Raven^{®} 7000, Raven^{®} 1220 and Raven^{®} 1225), Mitsubishi Kagaku K. K. (MA8, MA11, MA77, MA100, MA220, MA230, MA600, MCF88, #10B, #20B, #30, #33, #40, #44, #45, #45L, #50, #55, #95, #260, #900, #970, #1000, #2200B, #2300, #2350, #2400B, #2650, #2700, #4000B and CF9), Orient Chemical Industries Ltd. (Bonjet Black CW-l, US 2018/0105710A1 Bonjet Black CW-2, and Bonjet Black CW-3) and Sensient Technologies (Sensijet^{®} Black SDP100, Sensijet^{®} Black SDP1000, and Sensijet^{®} Black SDP2000.

Preferably, the pigment can be self-dispersing in a selected continuous phase. Self-dispersing pigments are pigments that do not require an additional dispersant for being stable within a polymer composition. A self-dispersing pigment is a pigment that has been functionalized with a dispersing agent such as a molecule containing a hydrophilic functional group, for example, by covalent bonding of the molecule to the surface of the pigment.

Preferably, the amount (by weight) of the colorant in the inkjet ink compositions is at least 0.1, such as at least 0.5, at least 1, at least 1.5, and at least 2, % by weight. Preferably, the amount of the colorant is at most 10, such as at most 9, at most 8, at most 7, at most 6, and at most 5% by weight. This includes examples in which the amount of the colorant in the compositions is 0.1 to 10% by weight, such as 2 to 5% by weight.

Preferably, the ink compositions used in the present invention comprise a poly(styrene-maleic acid) or poly(styrene-maleamic acid) co-polymer and pigment in a weight ratio of from 20:1 to 1:20, preferably from 10:1 to 1:10, more preferably from 5:1 to 1:5.

A colorant used in the inventive inkjet ink compositions can comprise one or more examples described herein.

### Fluid Carrier

The inkjet ink compositions comprise a fluid carrier which, optionally, comprises water and one or more organic co-solvents, which can be water-soluble organic co-solvents, water-miscible organic co-solvents, or a combination thereof. The organic co-solvents can be added either alone or in combination.

Preferably, the organic co-solvents are optionally humectants, which can reduce the rate of evaporation of the water component and prevent an ink composition from drying out or crusting in the nozzles of the printhead to minimize clogging of the nozzles. The organic co-solvents can enhance solubility of the components in the inkjet ink composition and facilitate penetration of a printed ink composition into a substrate.

Suitable water-soluble and water-miscible organic solvents include, but are not limited to, alcohols (e.g., methanol, ethanol, propanol, isopropyl alcohol, butanol, polyols, ethylene glycol, propylene glycol, dipropylene glycol and PEG, among others), ketones and ketone alcohols (e.g., acetone and diacetone alcohol, among others), ethers (e.g., tetrahydrofuran, dioxane, and alkylethers, among others), ethers of polyhydric alcohols (e.g., ethylene glycol monomethyl ether, ethylene glycol monoethyl ether, ethylene glycol monoethyl ether acetate, di(ethyleneglycol) monomethyl ether), nitrogen-containing solvents (e.g., 2-pyrrolidone, and N-methyl2-pyrrolidone, among others), sulfur-containing solvents (e.g., 2,2'-thiodiethanol, dimethylsulfoxide, tetramethylene sulfone, and sulfolane, among others), and sugars and derivatives thereof (e.g., glucose, oxyethylene adducts of glycerin, and oxyethylene adducts of diglycerin, among others). Preferably, the organic co-solvent is propylene glycol and/or dipropylene glycol.

Preferably, the amount (by weight) of the organic co-solvent in the inkjet ink composition is optionally at least 1, such as at least 5, and at least 10, % by weight. Preferably, the amount (by weight) of the organic co-solvent is at most 80, such as at most 70, at most 60, and at most 50% by weight. This includes examples in which the amount of the organic co-solvent in the composition is 1 to 80% by weight, such as 10 to 50% by weight.

An organic co-solvent used in the inventive ink compositions can comprise one or more examples described herein.

Preferably, the inks used in the present invention are water-based. Unless stated otherwise, water-based inks comprise at least 20, at least 25, and at least 30% by weight. Preferably, the amount (by weight) of water is at most 95, at most 85, at most 80, at most 75, at most 70, at most 65, and at most 60% by weight. This includes examples in which the amount of water in the composition is 20 to 95% by weight, such as 20 to 80, and 30 to 70% by weight. The range of water in the composition is typically 30 to 75% by weight, and more typically 30 to 60% by weight.

### Preparation of the Inkjet Ink Compositions

The invention also provides methods of preparing the inkjet ink compositions described herein. For example, the inkjet ink compositions of the invention can be prepared by mixing a dispersion of a pigment in water and a carboxylic acid functional co-polymer dispersant, selected from a poly(styrene-maleic acid) co-polymer or a poly(styrene-maleamic acid) co-polymer dispersant, with at least an organic solvent, further quantities of a poly(styrene-maleic acid) co-polymer or a poly(styrene-maleamic acid) co-polymer and a biocide.

The inkjet ink composition can optionally be prepared by mixing a pigment in water and a carboxylic acid functional co-polymer dispersant, selected from a poly(styrene-maleic acid) co-polymer or a poly(styrene-maleamic acid) co-polymer dispersant, with at least an organic solvent, fluid carrier, an optional crosslinking agent, and optional additives.

For example, the fluid carrier can be prepared by combining one or more water-soluble organic co-solvents, one or more water-miscible organic co-solvents or a mixture thereof, with water, which can be combined with the other components of the composition. The organic co-solvent(s) and water of the fluid carrier can optionally be combined directly with carboxylic acid functional co-polymer, colorant(s), optional crosslinking agent and optional additives.

An ink composition used according to the invention can comprise a combination of two or more examples described herein.

The water-based inks are prepared in the normal manner. A dispersion of the pigment can be prepared in the traditional manner using high shear mixing to form a concentrate premix and then milling. Normally, the carrier liquid, which can be water, or another solvent liquid, is mixed under high shear conditions with a dispersing agent and a wetting agent whilst a powder of the pigment is added. The resulting mixture is typically mixed under high shear conditions for a short time before charging to a bead mill, for example a Netzsch or Buhler mill. The suspension is milled for a fixed time until the desired particle size of the dispersion is reached - typically 100-150nm (Z-average particle size). At this time, the dispersion is usually discharged from the mill through a filter cartridge into a holding or storage vessel. The dispersions can be made separately, or the two pigments can be combined as powders at the start and essentially co-processed together through the high shear mixing and milling phases.

The ink is prepared in the normal manner for an aqueous pigment ink. To the stirred liquid comprising of water, or another suitable solvent, is added the co-solvents. The colorant dispersion(s) are then added slowly, and the other components of the ink are then added - this may be components such as biocides or preservatives, binders, polymers, resins, surfactants, wetting agents and small quantities of other co-solvents. The ink is pumped under positive pressure through a cartridge filter and packed.

### Methods of Printing

The invention further includes methods of printing an image on a fibrous textile substrate by applying an inkjet ink composition disclosed herein onto the substrate. Preferably, the inkjet ink compositions disclosed herein are adapted for use with an inkjet printing apparatus.

In the method of printing an image according to the invention, droplets of an inkjet ink composition as disclosed herein are ejected from a small nozzle of a printhead and deposited onto a print substrate to generate an image thereon. Suitable inkjet ink printing apparatus can include, but are not limited to, Drop-on-Demand Valve (DoD Valve), MEMS technology and Drop-on-Demand PiezoElectric (DoD Piezo).

As used herein, a fibrous substrate is a material that is composed from fibres, which may be natural fibres or synthetic fibres. Preferably, the fibrous substrates that are suitable for use in the present invention are made from natural fibres such as cellulose or protein (e.g., collagen) fibres. Preferably, the fibrous substrate is composed from natural fibres and is selected from wood (e.g., fiberboard), paper (e.g., wallpaper or cardboard), leather, silk, cotton, wool (e.g., merino wool or cashmere), hemp, ramie, sisal, bamboo, flax or blends of the same.

As will be appreciated in the art, wood, cotton, hemp, ramie, sisal, bamboo and flax comprise cellulose fibres and can therefore be referred to as cellulosic substrates. However, the present invention is not limited to natural cellulosic substrates and also includes synthetic cellulosic substrates such as rayon. As used herein rayon substrates include viscose rayon, modal rayon acetate rayon and lyocell rayon.

As will be understood in the art, the term "fibrous" used in connection with cellulosic substrates does not refer to polymeric cellulosic chains, but instead to the fibres formed by multiple polymeric cellulosic chains which are bound together by intermolecular forces between chains to form cellulose fibres comprising many tens of polymer chains as, for instance, found in naturally occurring cellulosic fibre such as cotton.

Preferably, the fibrous substrates that are suitable for use in the present invention are made from or are synthetic fibres. Preferably, the synthetic fibres that can be used in the present invention are selected from MET-OPP (Metalized Orientated Polypropylene), PA (polyamide e.g., Nylon), spandex, polyester, PET (Polyethylene Terephthalate), MET-PET (Metallized Polyethylene Terephthalate), PP (polypropylene), PVC (Polyvinyl Chloride) or blends of the same. Accordingly, preferably the fibrous substrate is composed from synthetic fibres and is selected form MET-OPP (Metalized Orientated Polypropylene), PA (polyamide e.g., Nylon), spandex, polyester, PET (Polyethylene Terephthalate), MET-PET (Metallized Polyethylene Terephthalate), PP (polypropylene), PVC (Polyvinyl Chloride) or blends of the same.

According to the invention, the fibrous substrate is a textile. As will be understood in the art, textiles are formed from weaving, knitting, crocheting, knotting, tatting, felting, bonding and/or braiding yarns, which themselves are formed from fibres. The textile substrates suitable for use in the present invention may be formed from or are any one or more of the fibres described herein. According, the textile substrate can preferably be formed from or is cotton, rayon, silk, polyester, PET, spandex, nylon, leather, wool, hemp, ramie, sisal, bamboo, flax, MET-OPP (Metalized Orientated Polypropylene), MET-PET (Metallized Polyethylene Terephthalate), PP (polypropylene), PVC (Polyvinyl Chloride) or blends thereof. Preferably the textile substrate is canvas, chenille, chiffon, crepe, damask, georgette, gingham, jersey, lace, linen, polyvinyl chloride, leather, merino wool, modal, muslin, organza, satin, spandex, suede, taffeta, toile, tweed, twill and velvet.

Preferably, the textile is a non-woven textile.

Preferably, the substrates used in the present invention are selected from textile materials, woods, bamboo, leather, wallpapers, fiberboards and cardboard.

The inkjet ink compositions used in the present invention are formulated to have properties that allow for at least one of the following: 1) uniform, bleed-free print images with high resolution and high density on a print substrate; 2) inhibition or prevention of nozzle clogging which typically occurs due to drying of the ink at a distal end of a nozzle of the printing apparatus; 3) rapid drying on a print substrate (paper, fabric, etc.); 4) long-term storage stability; and 5) print characteristics that are independent of the print substrate quality. The inkjet ink compositions can also provide ink stability and robustness against fluctuating temperature conditions which can occur during transport and storage, to eliminate or inhibit nozzle clogging, banding, and poor print quality.

The inkjet ink compositions used in the present invention can advantageously be used in industrial inkjet processes and can be adapted specifically for use in textile articles and textile printing processes. The inkjet ink compositions adapted for textile printing can be formulated to have at least one of the following properties: 1) fastness to textiles such as cotton, wool, hemp, linen, ramie, sisal, rayon, cellulose acetate, bamboo, flax, woven MET-PET (Metalized Orientated Polypropylene), PA (polyamide, Nylon), PET (Polyethylene Terephthalate), MET-PET (Metallized Polyethylene Terephthalate), PP (polypropylene) and PVC (Polyvinyl Chloride) or blends of the same; and 2) ease of application and fixation to the textile substrate.

The ink is then suitable for use in an industrial high-speed digital printing press for the decoration of textiles and other substrates (for example, wallpapers). On printing the films, with the combination of the black ink, and standard inks of other colours comprising at least Cyan, Magenta and Yellow, and may also include, but not limited to spot colours such as Red, Orange, Violet and Green, the sequence of printing by digital means the separate colours and drying the resulting deposited wet inks by Near Infra-Red lamps at full power, enables the printing press to run at full speed and results in no deformation of the printed films. The end result is a very high productivity and a very high final print quality.

### Measurement Methods

Acid Value (AV): Acid value (or acid number) is defined as the mass of potassium hydroxide (KOH) in milligrams that is required to neutralize one gram of chemical substance. The acid value is suitably measured in accordance with the ISO 2114:2000(E) (method B) standard.

Particle Size/Average Particle Size: Unless stated otherwise, the terms "particle size" or "average particle size" refer to the Z-average i.e., the harmonic mean from the intensity-weighted distribution as measured by dynamic light scattering (DLS), as defined in ISO 22412:2008.

Nanoscale: In the context of the invention this refers to a particle having one dimension of less than 100nm, a commonly accepted definition of a nanoparticle.

Polydispersity: Polydispersity (or polydispersity index) as used herein is a measure of the heterogeneity of a sample based on size. Unless stated otherwise, polydispersity was measured using a using a Malvern Zetasizer Nano-S particle size analyzer from Malvern Instruments.

Molecular Weight: The terms "molecular weight" or "average molecular weight" is a reference to the weight average molecular weight (Mw). The molecular weight is suitably measured by techniques known in the art such as gel permeation chromatography. Preferably, molecular weight is measured by comparison with a polystyrene standard. For instance, molecular weight determination may be conducted on a Hewlett-Packard 1050 Series HPLC system equipped with two GPC Ultrastyragel columns, 103 and 104 Å (5 µm mixed, 300 mm x 19 mm, Waters Millipore Corporation, Milford, MA, USA) and THF as mobile phase. The skilled person will appreciate that this definition of molecular weight applies to polymeric materials which typically have a molecular weight distribution.

Unless stated otherwise, the viscosities of the inks were measured using a Brookfield DV-II+ Pro Viscometer equipped with an Enhanced Brookfield UL Adapter at 60 rpm and 25°C.

Unless stated otherwise, pH and conductivity were measured at 25°C using an Oakton 510 series pH/conductivity meter.

Unless stated otherwise, dynamic surface tension is measured using a SITA bubble pressure tensiometer at 25°C and 2.7 Hz and static surface temperature is measure using a SITA bubble pressure tensiometer at 25°C and a bubble frequency of 0.025 Hz.

### EXAMPLES

The invention is further described by the following non-limiting examples which further illustrate the invention, and are not intended, nor should they be interpreted to, limit the scope of the invention.

### Example 1: Cyan Dispersion and Inks

1a. Cyan Dispersion (3.69% poly(styrene-maleic acid) polymer solids): To a mechanically stirred tank or vessel is added 44.98kg of deionised water (conductivity less than 25microSiemens) and 14.74kg of Xiran 3000 HNa solution (poly(styrene-maleic acid) in water at 25% polymer solids, acid number 255-305 mg KOH/g and molecular weight 10kD) and the two components mixed using stirring for a few minutes. 0.22kg biocide was then added with continual stirring of the mixture. The pigment powder, Heliogen Blue D 7086, 14.74kg is then added slowly to the tank with continued stirring. The resulting mixture is stirred for 45 minutes and then mixed under high shear for a further 60 minutes. The mixture is then pumped into a MMP3 bead mill (Buhler) and the process of milling is started. After four hours, the milling is deemed complete and the dispersion is back into a mechanically stirred tank and 25.32kg of deionised water is added. After mixing for a few minutes, the dispersion is pumped through a 1-micron depth filter (absolute) and stored. The physical properties of the dispersion were measured to give a viscosity of 3.40 mPa.s (3.40cP) (measured at 25°C at low shear (i.e. at 60 rpm) using a ThermoHaake Rheostress 1); pH 10.0 (measured at 25°C using an WTW pH-Electrode Sen Tix 81); conductivity 3.0mScm⁻¹ (measured at 25°C using a WTW Tetra-Con 325); particle size Z-average 128nm (measured using a Malvern Zetasizer Nano-ZS); pigment solids content 14.70%w/w (measured using a Shimadzu UV-Vis recording Spectrophotometer - UV-2501 PC).

1b. Cyan Ink Set 1 (1.17% (poly(styrene-maleic acid) polymer solids, no additional polymer types): To a mechanically stirred tank or vessel using a saw tooth impellar is added 31.6kg of the cyan dispersion (Example 1a); followed by deionised water, 26.3kg; propylene glycol, 34.6kg; dipropylene glycol, 6.7kg; and finally silicone wetting agent, 0.8kg. The mixture was stirred for a further 1 hour at ambient temperature and then the mixture filtered through a 1-micron absolute polypropylene spun depth filter. The physical properties of the ink were measured to give a viscosity of 5.60 mPa.s (5.60cP) (measured at 32°C at low shear (i.e. at 60 rpm) using a Brookfield DV-II+ Viscometer); pH 10.22 (measured at 25°C using an Oakton 510 series pH/conductivity meter); conductivity 0.259mScm⁻¹ (measured at 25°C using an Oakton 510 series pH/conductivity meter); dynamic surface tension (measured using a SITA bubble pressure tensiometer): 40.4mNm⁻¹ (measured at 25°C and 11 Hz), 34.9 mNm⁻¹ (measured at 25°C and 2.7 Hz), 30.4 mNm⁻¹ (measured at 25°C and 0.1 Hz) and 30.1 mNm-1 (measured at 25°C and 0.025Hz); particle size Z-average 119nm, Dv50 98nm, Dv90 218nm, polydispersity 0.196 (measured using a Malvern Zetasizer Nano-S); resolubility was measured using the test described below and found to be < 1 minute.

1c. Cyan Ink Set 2 (2.65% (poly(styrene-maleic acid) polymer solids, no additional polymer types): To a mechanically stirred tank or vessel using a saw tooth impellar is added 29.6kg of the cyan dispersion (Example 1a); followed by deionised water, 24.6kg; propylene glycol, 32.55kg; dipropylene glycol, 6.25kg; Xiran 1000A 6.25kg (25% (poly(styrene-maleamic acid) polymer solution in water, acid number 465-500 mg KOH/g and molecular weight 5kD); and finally silicone wetting agent, 0.75kg. The mixture was stirred for a further 1 hour at ambient temperature and then the mixture filtered through a 1-micron absolute polypropylene spun depth filter. The physical properties of the ink were measured to give a viscosity of 8.69 mPa.s (8.69cP) (measured at 32°C at low shear (i.e. at 60 rpm) using a Brookfield DV-II+ Viscometer); pH 8.66 (measured at 25°C using an Oakton 510 series pH/conductivity meter); conductivity 1.471mScm⁻¹ (measured at 25°C using an Oakton 510 series pH/conductivity meter); dynamic surface tension (measured using a SITA bubble pressure tensiometer): 43.2mNm⁻¹ (measured at 25°C and 11 Hz), 36.4 mNm⁻¹ (measured at 25°C and 2.7 Hz), 29.8 mNm⁻¹ (measured at 25°C and 0.1 Hz), 29.4 mNm⁻¹ (measured at 25°C and 0.025Hz); particle size Z-average 130nm, Dv50 116nm, Dv90 257nm, polydispersity 0.206 (measured using a Malvern Zetasizer Nano-S); resolubility was measured using the test described below and found to be < 1 minute.

1d. Cyan Ink Set 3 (2.85% (poly(styrene-maleic acid) polymer solids, no additional polymer types): To a mechanically stirred tank or vessel using a saw tooth impellar is added 29.6kg of the cyan dispersion (Example 1a); followed by deionised water, 24.6kg; propylene glycol, 32.55kg; dipropylene glycol, 6.25kg; Xiran 2000A 6.25kg (25% (poly(styrene-maleamic acid) solution in water, acid number 335-375 mg KOH/g and molecular weight 7kD); and finally silicone wetting agent, 0.75kg. The mixture was stirred for a further 1 hour at ambient temperature and then the mixture filtered through a 1-micron absolute polypropylene spun depth filter. The physical properties of the ink were measured to give a viscosity of 5.03 mPa.s (5.03cP) (measured at 25°C at low shear (i.e. at 60 rpm) using a Brookfield DV-II+ Viscometer); pH 8.72 (measured at 25°C using an Oakton 510 series pH/conductivity meter); conductivity 0.989mScm⁻¹ (measured at 25°C using an Oakton 510 series pH/conductivity meter); dynamic surface tension (measured using a SITA bubble pressure tensiometer): 39.8mNm⁻¹ (measured at 25°C and 11 Hz), 35.0 mNm⁻¹ (measured at 25°C and 2.7 Hz), 31.6 mNm⁻¹ (measured at 25°C and 0.1 Hz) and 31.4 (measured at 25°C and 0.025Hz); particle size Z-average 126nm, Dv50 127nm, Dv90 205nm, polydispersity 0.204 (measured using a Malvern Zetasizer Nano-S); resolubility was measured using the test described below and found to be < 1 minute.

1e. Cyan Ink Set 4 (2.65% (poly(styrene-maleic acid) polymer solids, no additional polymer types): To a mechanically stirred tank or vessel using a saw tooth impellar is added 29.6kg of the cyan dispersion (Example 1a); followed by deionised water, 24.6kg; propylene glycol, 32.55kg; dipropylene glycol, 6.25kg; Xiran 3000H, 6.25kg (25% (poly(styrene-maleamic acid) solution in water, acid number 255-305 mg KOH/g and molecular weight 10kD); and finally silicone wetting agent, 0.75kg. The mixture was stirred for a further 1 hour at ambient temperature and then the mixture filtered through a 1-micron absolute polypropylene spun depth filter. The physical properties of the ink were measured to give a viscosity of 4.22 mPa.s (4.22cP) (measured at 25°C at low shear (i.e. at 60 rpm) using a Brookfield DV-II+ Viscometer); pH 9.70 (measured at 25°C using an Oakton 510 series pH/conductivity meter); conductivity 1.102mScm⁻¹ (measured at 25°C using an Oakton 510 series pH/conductivity meter); dynamic surface tension (measured using a SITA bubble pressure tensiometer): 45.9mNm⁻¹ (measured at 25°C and 11 Hz), 39.7 mNm⁻¹ (measured at 25°C and 2.7 Hz), 34.6 mNm⁻¹ (measured at 25°C and 0.1 Hz) and 34.2 mNm⁻¹ (measured at 25°C and 0.025 Hz); particle size Z-average 123nm, Dv50 145nm, Dv90 243nm, polydispersity 0.211 (measured using a Malvern Zetasizer Nano-S); resolubility was measured using the test described below and found to be < 1 minute.

1f. Cyan Ink Set 5 (2.65% (poly(styrene-maleic acid) polymer solids, no additional polymer types): To a mechanically stirred tank or vessel using a saw tooth impellar is added 29.6kg of the cyan dispersion (Example 1a); followed by deionised water, 24.6kg; propylene glycol, 32.55kg; dipropylene glycol, 6.25kg; Xiran 3000HNa, 6.25kg (25% (poly(styrene-maleic acid) solution in water; acid number 255-305 mg KOH/g and molecular weight 10kD); and finally silicone wetting agent, 0.75kg. The mixture was stirred for a further 1 hour at ambient temperature and then the mixture filtered through a 1-micron absolute polypropylene spun depth filter. The physical properties of the ink were measured to give a viscosity of 7.76 mPa.s (7.76cP) (measured at 25°C at low shear (i.e. at 60 rpm) using a Brookfield DV-II+ Viscometer); pH 10.27 (measured at 25°C using an Oakton 510 series pH/conductivity meter); conductivity 2.24mScm⁻¹ (measured at 25°C using an Oakton 510 series pH/conductivity meter); dynamic surface tension (measured using a SITA bubble pressure tensiometer): 54.2mNm⁻¹ (measured at 25°C and 8.1 Hz), 46.4 mNm⁻¹ (measured at 25°C and 2.7 Hz), 36.2 mNm⁻¹ (measured at 25°C and 0.1 Hz), 35.4 mNm⁻¹ (measured at 25°C and 0.025 Hz); particle size Z-average 127nm, Dv50 106nm, Dv90 268nm, polydispersity 0.219 (measured using a Malvern Zetasizer Nano-S); resolubility was measured using the test described below and found to be < 1 minute.

1g. Cyan Ink Set 6 (0.74% (poly(styrene-maleic acid) polymer solids + one additional non-SMA polymer - acrylic): To a mechanically stirred tank or vessel using a saw tooth impellar is added 34.70kg of deionised water (conductivity less than 25microSiemens); 13.00kg of monopropylene glycol; 5.00kg of dipropylene glycol; 0.10kg of biocide; 0.80kg of sodium dioctyl sulfosuccinate flow additive; 1.20kg of silicone wetting agent; 1.20kg of wax emulsion; and 24.00kg of Joncryl 8050-E (polyacrylic solution at 42% polymer solids in water; acid number 114 mg KOH/g and molecular weight >200kD). The mixture is stirred until homogenous and then slowly added to a second vessel which is also mechanically stirred using a saw tooth impellar containing the Example 1a dispersion, 20.00kg. The mixture is stirred for a further 30 mins following complete addition of the liquids and then pumped through a 1-micron polypropylene (absolute) depth filter to afford the finished ink. The physical properties of the ink were measured to give a viscosity of 4.46 mPa.s (4.46cP) (measured at 32°C at low shear (i.e. at 60 rpm) using a ThermoHaake Rheostress 1); pH 7.91 (measured at 25°C using a WTW pH-Electrode SenTix 81); conductivity 4.43mScm⁻¹ (measured at 25°C using a WTW Tetra-Con 325); dynamic surface tension (all measured using a SITA bubble pressure tensiometer): 35.6mNm⁻¹ (measured at 25°C and 11 Hz), 29.3 mNm⁻¹ (measured at 25°C and 2.7 Hz), 26.4 mNm⁻¹ (measured at 25°C and 0.1 Hz); particle size Z-average 133nm, Dv50 117nm, Dv90 237nm, Dv95 281nm (measured using a Malvern Zetasizer Nano-ZS). Ink resolubilized in < 2 hours.

### Example 2: Magenta Dispersion and Inks

2a. Dispersion (4.25% poly(styrene-maleic acid) polymer solids): To a mechanically stirred tank or vessel is added 51.75kg of deionised water (conductivity less than 25microSiemens) and 17.00kg of Xiran 3000 HNa solution (25% (poly(styrene-maleic acid) solution in water; acid number 255-305 mg KOH/g and molecular weight 10kD) and the two components mixing using stirring for a few minutes. 0.26kg biocide was then added with continual stirring of the mixture. The pigment powder, Cinquasia Pink K 4430 FP, 17.00kg is then added slowly to the tank with continued stirring. The resulting mixture is stirred for 45 minutes and then mixed under high shear for a further 60 minutes. The mixture is then pumped into a MMP3 bead mill (Buhler) and the process of milling is started. After four hours, the milling is deemed complete and the dispersion is back into a mechanically stirred tank and 13.99kg of deionised water is added. After mixing for a few minutes, the dispersion is pumped through a 1-micron depth filter (absolute) and stored. The physical properties of the dispersion were measured to give a viscosity of 3.60 mPa.s (3.60cP) (measured at 25°C at low shear (i.e. at 60 rpm) using a ThermoHaake Rheostress 1); pH 9.9 (measured at 25°C using a WTW pH-Electrode Sen Tix 81); conductivity 3.3mScm-1 (measured at 25°C WTW Tetra-Con 325); particle size Z-average 127nm (measured using a Malvern Zetasizer Nano-ZS); pigment solids content 17.0%w/w (measured using a Shimadzu UV-Vis recording Spectrophotometer - UV-2501 PC).

2b. Magenta Ink Set 1 (1.34% (poly(styrene-maleic acid) polymer solids, no additional polymer types): To a mechanically stirred tank or vessel using a saw tooth impellar is added 31.6kg of the magenta dispersion (Example 2a); followed by deionised water, 26.3kg; propylene glycol, 34.6kg; dipropylene glycol, 6.7kg; and finally silicone wetting agent, 0.8kg. The mixture was stirred for a further 1 hour at ambient temperature and then the mixture filtered through a 1-micron absolute polypropylene spun depth filter. The physical properties of the ink were measured to give a viscosity of 5.52 mPa.s (5.52cP) (measured at 32°C at low shear (i.e. at 60 rpm) using a Brookfield DV-II+ Viscometer); pH 10.13 (measured at 25°C using an Oakton 510 series pH/conductivity meter); conductivity 0.305mScm⁻¹ (measured at 25°C using an Oakton 510 series pH/conductivity meter); dynamic surface tension (measured using a SITA bubble pressure tensiometer): 38.5 mNm⁻¹ (measured at 25°C and 11 Hz), 33.4 mNm⁻¹ (measured at 25°C and 2.7 Hz), 29.3 mNm⁻¹ (measured at 25°C and 0.1 Hz), 29.1 mNm⁻¹ (measured at 25°C and 0.025 Hz); particle size Z-average 126nm, Dv50 108nm, Dv90 3740nm, polydispersity 0.255 (measured using a Malvern Zetasizer Nano-S); resolubility was measured using the test described below and found to be < 1 minute.

2c. Magenta Ink Set 4 (2.82% (poly(styrene-maleic acid) polymer solids, no additional polymer types): To a mechanically stirred tank or vessel using a saw tooth impellar is added 29.6kg of the magenta dispersion (Example 2a); followed by deionised water, 24.6kg; propylene glycol, 32.55kg; dipropylene glycol, 6.25kg; Xiran 3000H, 6.25kg (poly(styrene-maleamic acid) 25% solution in water, acid number 255-305 mg KOH/g and molecular weight 10kD); and finally silicone wetting agent, 0.75kg. The mixture was stirred for a further 1 hour at ambient temperature and then the mixture filtered through a 1-micron absolute polypropylene spun depth filter. The physical properties of the ink were measured to give a viscosity of 4.33 mPa.s (4.33cP) (measured at 25°C at low shear (i.e. at 60 rpm) using a Brookfield DV-II+ Viscometer); pH 9.57 (measured at 25°C using an Oakton 510 series pH/conductivity meter); conductivity 1.131mScm⁻¹ (measured at 25°C using an Oakton 510 series pH/conductivity meter); dynamic surface tension (measured using a SITA bubble pressure tensiometer) : 45.4mNm⁻¹ (measured at 25°C and 11 Hz), 38.9 mNm⁻¹ (measured at 25°C and 2.7 Hz), 33.5 mNm⁻¹ (measured at 25°C and 0.1 Hz) and 33.0 mNm⁻¹ (measured at 25°C and 0.025 Hz); particle size Z-average 122nm, Dv50 147nm, Dv90 3890nm, polydispersity 0.239 (measured using a Malvern Zetasizer Nano-S); resolubility was measured using the test described below and found to be < 1 minute.

2d. Magenta Ink Set 6 (0.85% (poly(styrene-maleic acid) polymer solids + one additional non-SMA polymer - acrylic): To a mechanically stirred tank or vessel using a saw tooth impellar is added 34.70kg of deionised water (conductivity less than 25microSiemens); 13.00kg of monopropylene glycol; 5.00kg of dipropylene glycol; 0.10kg of biocide; 0.80kg of sodium dioctyl sulfosuccinate flow additive; 1.20kg of silicone wetting agent; 1.20kg of wax emulsion; and 24.00kg of Joncryl 8050-E. The mixture is stirred until homogenous and then slowly added to a second vessel which is also mechanically stirred using a saw tooth impellar containing Example 2a dispersion, 20.00kg. The mixture is stirred for a further 30 mins following complete addition of the liquids and then pumped through a 1-micron polypropylene (absolute) depth filter to afford the finished ink. The physical properties of the ink were measured to give a viscosity of 4.29 mPa.s (4.29cP) (measured at 32°C at low shear (i.e. at 60 rpm) using a ThermoHaake Rheostress 1); pH 7.90 (measured at 25°C using a WTW pH-Electrode SenTix 81); conductivity 4.42mScm⁻¹ (measured at 25°C using a WTW Tetra-Con 325); dynamic surface tension (all measured using a SITA bubble pressure tensiometer) : 34.5mNm-1 (measured at 25°C and 11 kHz), 28.9 mNm-1 (measured at 25°C and 2.7 kHz), 26.1 mNm-1 (measured at 25°C and 0.1 kHz); particle size Z-average 117nm, Dv50 93nm, Dv90 191nm, Dv95 231nm (measured using a Malvern Zetasizer Nano-ZS). Ink resolubilized in < 2 hours.

### Example 3: Yellow Dispersion and Inks

3a. Dispersion (4.63% poly(styrene-maleic acid) polymer solids):: To a mechanically stirred tank or vessel is added 56.22kg of deionised water (conductivity less than 25microSiemens) and 18.50kg of Xiran 3000 HNa solution (25% (poly(styrene-maleic acid) solution in water; acid number 255-305 mg KOH/g and molecular weight 10kD) and the two components mixing using stirring for a few minutes. 0.26 biocide was then added with continual stirring of the mixture. The pigment powder, Irgazin Yellow L 2040, 18.50kg is then added slowly to the tank with continued stirring. The resulting mixture is stirred for 45 minutes and then mixed under high shear for a further 60 minutes. The mixture is then pumped into a MMP3 bead mill (Buhler) and the process of milling is started. After four hours, the milling is deemed complete and the dispersion is back into a mechanically stirred tank and 6.50kg of deionised water is added. After mixing for a few minutes, the dispersion is pumped through a 1-micron depth filter (absolute) and stored. The physical properties of the dispersion were measured to give a viscosity of 4.20 mPa.s (4.20cP) (measured at 25°C at low shear (i.e. at 60 rpm) using a ThermoHaake Rheostress 1); pH 8.9 (measured at 25°C using a WTW pH-Electrode Sen Tix 81); conductivity 3.4mScm-1 (measured at 25°C WTW Tetra-Con 325); particle size Z-average 146nm (measured using a Malvern Zetasizer Nano-ZS); pigment solids content 18.0%w/w (measured using a Shimadzu UV-Vis recording Spectrophotometer - UV-2501 PC).

3b. Yellow Ink Set 1 (1.46% (poly(styrene-maleic acid) polymer solids, no additional polymer types): To a mechanically stirred tank or vessel using a saw tooth impellar is added 31.6kg of the yellow dispersion (Example 3a); followed by deionised water, 26.3kg; propylene glycol, 34.6kg; dipropylene glycol, 6.7kg; and silicone wetting agent, 0.8kg. The mixture was stirred for a further 1 hour at ambient temperature and then the mixture filtered through a 1-micron absolute polypropylene spun depth filter. The physical properties of the ink were measured to give a viscosity of 6.08 mPa.s (6.08cP) (measured at 32°C at low shear (i.e. at 60 rpm) using a Brookfield DV-II+ Viscometer); pH 6.72 (measured at 25°C using an Oakton 510 series pH/conductivity meter); conductivity 0.159mScm⁻¹ (measured at 25°C using an Oakton 510 series pH/conductivity meter); dynamic surface tension (measured using a SITA bubble pressure tensiometer) : 37.5 mNm⁻¹ (measured at 25°C and 11 Hz), 31.8 mNm⁻¹ (measured at 25°C and 2.7 Hz), 28.0 mNm⁻¹ (measured at 25°C and 0.1 Hz), 27.6 mNm⁻¹ (measured at 25°C and 0.025 Hz); particle size Z-average 122nm, Dv50 1320nm, Dv90 2140nm, polydispersity 0.250 (measured using a Malvern Zetasizer Nano-S); resolubility was measured using the test described below and found to be < 1 minute.

3c. Yellow Ink Set 4 (2.95% (poly(styrene-maleic acid) polymer solids, no additional polymer types): To a mechanically stirred tank or vessel using a saw tooth impellar is added 29.6kg of the yellow dispersion (Example 3a); followed by deionised water, 24.6kg; propylene glycol, 32.45kg; dipropylene glycol, 6.3kg; Xiran 3000H, 6.3kg (poly(styrene-maleamic acid) 25% solution in water, acid number 255-305 mg KOH/g and molecular weight 10kD); and finally silicone wetting agent, 0.75kg. The mixture was stirred for a further 1 hour at ambient temperature and then the mixture filtered through a 1-micron absolute polypropylene spun depth filter. The physical properties of the ink were measured to give a viscosity of 5.07 mPa.s (5.07cP) (measured at 25°C at low shear (i.e. at 60 rpm) using a Brookfield DV-II+ Viscometer); pH 9.13 (measured at 25°C using an Oakton 510 series pH/conductivity meter); conductivity 1.079mScm⁻¹ (measured at 25°C using an Oakton 510 series pH/conductivity meter); dynamic surface tension (measured using a SITA bubble pressure tensiometer) : 45.2mNm⁻¹ (measured at 25°C and 11 Hz), 38.2 mNm⁻¹ (measured at 25°C and 2.7 Hz), 32.7 mNm⁻¹ (measured at 25°C and 0.1 Hz) and 32.2 mNm⁻¹ (measured at 25°C and 0.025 Hz); particle size Z-average 128nm, Dv50 165nm, Dv90 2070nm, polydispersity 0.240 (measured using a Malvern Zetasizer Nano-S); resolubility was measured using the test described below and found to be < 1 minute.

3d. Yellow Ink Set 6 (0.93% (poly(styrene-maleic acid) polymer solids, one additional non SMA polymer): To a mechanically stirred tank or vessel using a saw tooth impellar is added 34.70kg of deionised water (conductivity less than 25microSiemens); 13.00kg of monopropylene glycol; 5.00kg of dipropylene glycol; 0.10kg of biocide; 0.80kg of sodium dioctyl sulfosuccinate flow additive; 1.20kg of silicone wetting agent; 1.20kg of wax emulsion; and 24.00kg of Joncryl 8050-E. The mixture is stirred until homogenous and then slowly added to a second vessel which is also mechanically stirred using a saw tooth impellar containing the Example 3a dispersion, 20.00kg. The mixture is stirred for a further 30 mins following complete addition of the liquids and then pumped through a 1-micron polypropylene (absolute) depth filter to afford the finished ink. The physical properties of the ink were measured to give a viscosity of 4.71 mPa.s (4.71cP) (measured at 32°C at low shear (i.e. at 60 rpm) using a ThermoHaake Rheostress 1); pH 7.86 (measured at 25°C using a WTW pH-Electrode SenTix 81); conductivity 4.38mScm-1 (measured at 25°C using a WTW Tetra-Con 325); dynamic surface tension (all measured using a SITA bubble pressure tensiometer) : 34.7mNm-1 (measured at 25°C and 11 kHz), 29.1 mNm-1 (measured at 25°C and 2.7 kHz), 25.6 mNm-1 (measured at 25°C and 0.1 kHz); particle size Z-average 126nm, Dv50 99nm, Dv90 222nm, Dv95 272nm (measured using a Malvern Zetasizer Nano-ZS). Ink resolubilized in < 2 hours.

### Example 4: Black Dispersion and Ink

4a. Dispersion (3.5% poly(styrene-maleic acid) polymer solids): To a mechanically stirred tank or vessel is added 41.79kg of deionised water (conductivity less than 25microSiemens), and 14.00kg of Xiran 3000 HNa solution (25% (poly(styrene-maleic acid) solution in water; acid number 255-305 mg KOH/g and molecular weight of 10kD)and the two components mixing using stirring for a few minutes. 0.21kg biocide was then added with continual stirring of the mixture. The pigment powder, Raven FC1, 14.00kg is then added slowly to the tank with continued stirring. The resulting mixture is stirred for 45 minutes and then mixed under high shear for a further 60 minutes. The mixture is then pumped into a MMP3 bead mill (Buhler) and the process of milling is started. After four hours, the milling is deemed complete and the dispersion is back into a mechanically stirred tank and 30.0kg of deionised water is added. After mixing for a few minutes, the dispersion is pumped through a 1-micron depth filter (absolute) and stored. The physical properties of the dispersion were measured to give a viscosity of 3.50 mPa.s (3.50cP) (measured at 25°C at low shear (i.e. at 60 rpm) using a ThermoHaake Rheostress 1); pH 9.0 (measured at 25°C using a WTW pH-Electrode Sen Tix 81); conductivity 3.8mScm⁻¹ (measured at 25°C WTW Tetra-Con 325); particle size Z-average 140nm (measured using a Malvern Zetasizer Nano-ZS); pigment solids content 14.0%w/w (measured using a Shimadzu UV-Vis recording Spectrophotometer - UV-2501 PC).

4b. Black Ink Set 1 (1.11% (poly(styrene-maleic acid) polymer solids, no additional polymer types): To a mechanically stirred tank or vessel using a saw tooth impellar is added 31.6kg of the black dispersion (Example 4a); followed by deionised water, 26.3kg; propylene glycol, 34.6kg; dipropylene glycol, 6.7kg; and finally silicone wetting agent, 0.8kg. The mixture was stirred for a further 1 hour at ambient temperature and then the mixture filtered through a 1-micron absolute polypropylene spun depth filter. The physical properties of the ink were measured to give a viscosity of 5.63 mPa.s (5.63cP) (measured at 32°C at low shear (i.e. at 60 rpm) using a Brookfield DV-II+ Viscometer); pH 9.33 (measured at 25°C using an Oakton 510 series pH/conductivity meter); conductivity 0.327mScm⁻¹ (measured at 25°C using an Oakton 510 series pH/conductivity meter); dynamic surface tension (measured using a SITA bubble pressure tensiometer) : 37.4 mNm⁻¹ (measured at 25°C and 11 Hz), 31.8 mNm⁻¹ (measured at 25°C and 2.7 Hz), 28.6 mNm⁻¹ (measured at 25°C and 0.1 Hz), 28.1 mNm⁻¹ (measured at 25°C and 0.025 Hz); particle size Z-average 123nm, Dv50 144nm, Dv90 3890nm, polydispersity 0.247 (measured using a Malvern Zetasizer Nano-S); resolubility was measured using the test described below and found to be < 1 minute.

4c. Black Ink Set 4 (2.60% (poly(styrene-maleic acid) polymer solids, no additional polymer types): To a mechanically stirred tank or vessel using a saw tooth impellar is added 29.6kg of the black dispersion (Example 4a); followed by deionised water, 24.6kg; propylene glycol, 32.55kg; dipropylene glycol, 6.25kg; Xiran 3000H, 6.25kg ((poly(styrene-maleamic acid) 25% solution in water, acid number 255-305 mg KOH/g and molecular weight of 10kD); and finally silicone wetting agent, 0.75kg. The mixture was stirred for a further 1 hour at ambient temperature and then the mixture filtered through a 1-micron absolute polypropylene spun depth filter. The physical properties of the ink were measured to give a viscosity of 4.24 mPa.s (4.24cP) (measured at 25°C at low shear (i.e. at 60 rpm) using a Brookfield DV-II+ Viscometer); pH 9.49 (measured at 25°C using an Oakton 510 series pH/conductivity meter); conductivity 1.178mScm⁻¹ (measured at 25°C using an Oakton 510 series pH/conductivity meter); dynamic surface tension (measured using a SITA bubble pressure tensiometer) : 45.3mNm⁻¹ (measured at 25°C and 11 Hz), 38.7 mNm⁻¹ (measured at 25°C and 2.7 Hz), 33.3 mNm⁻¹ (measured at 25°C and 0.1 Hz) and 32.7 mNm⁻¹ (measured at 25°C and 0.025 Hz); particle size Z-average 131nm, Dv50 113nm, Dv90 232nm, polydispersity 0.139 (measured using a Malvern Zetasizer Nano-S); resolubility was measured using the test described below and found to be < 1 minute.

4d. Black Ink Set 6 (0.70% (poly(styrene-maleic acid) polymer solids, one additional non SMA polymer): To a mechanically stirred tank or vessel using a saw tooth impellar is added 34.70kg of deionised water (conductivity less than 25microSiemens); 13.00kg of monopropylene glycol; 5.00kg of dipropylene glycol; 0.10kg of biocide; 0.80kg of sodium dioctyl sulfosuccinate flow additive; 1.20kg of silicone surfactant; 1.20kg of wax emulsion; and 24.00kg of Joncryl 8050-E. The mixture is stirred until homogenous and then slowly added to a second vessel which is also mechanically stirred using a saw tooth impellar containing the Example 4a dispersion, 20.00kg. The mixture is stirred for a further 30 mins following complete addition of the liquids and then pumped through a 1-micron polypropylene (absolute) depth filter to afford the finished ink. The physical properties of the ink were measured to give a viscosity of 4.24 mPa.s (4.24cP) (measured at 32°C at low shear (i.e. at 60 rpm) using a ThermoHaake Rheostress 1); pH 7.87 (measured at 25°C using a WTW pH-Electrode SenTix 81); conductivity 4.46mScm-1 (measured at 25°C using a WTW Tetra-Con 325); dynamic surface tension (all measured using a SITA bubble pressure tensiometer) : 34.5mNm-1 (measured at 25°C and 11 kHz), 28.6 mNm-1 (measured at 25°C and 2.7 kHz), 25.6 mNm-1 (measured at 25°C and 0.1 kHz); particle size Z-average 141nm, Dv50 126nm, Dv90 237nm, Dv95 276nm (measured using a Malvern Zetasizer Nano-ZS). Ink resolubilized in < 2 hours.

### Printing Method & Results

Ink Examples 1E, 2C, 3C and 4C were printed onto various fabrics with no prior chemical or physical pre-treatment using a Dimatix SMP2800 benchtop printer. The fabrics are as follows: untreated cotton; untreated polyester-cotton (65-35) blend material; untreated PVC-based wallpaper material; coated polyester fabric (Polyester Brook FKPD8 (PE)). Results can be found in Tables 1-8.

The drop size used on the printer was 10 picolitres through a Dimatix DMC-11610 print cartridge. The drop spacings used were 31 and 40 microns. The cartridge temperature was 32°C and the meniscus set point at 4 inches of water. All 16 nozzles were firing and the throw distance was fixed at 2-3mm. The inks were applied to the fabric using inkjet deposition from the Dimatix SMP2800 printer. Drawdowns using an industrial coater were also made. The drawdown samples were prepared by using a no. 2 K-bar, automatic coating machine and a speed setting "11". The printed fabrics were then dried in a convection oven for 10 minutes at 60°C and then heat-treated at 160°C for 120 seconds. The resulting printed fabrics were then immersed in a beaker containing a 1% w/w solution of Tergitol TMN-6 surfactant (polyethylene glycol trimethyl nonyl ether) in deionised water cleaning liquid. After intervals of 5 minutes, 1 hour and 24 hours of soaking, the washing liquid was visually inspected and found to contain no colorant. The color properties of the printed fabrics were measured before the 24h soak test and after drying following the 24h soak test. The fabric color properties were measured using an XRite Color i7 machine. In all cases but one, the colour change, ΔE, measured was less than 3, which is a preferred guideline for acceptance in the textile industry and not readily detectable by the human eye. In one case (Example 3C on 100% cotton), the ΔE was between 3-4, which is less preferred, but also considered a passing result. The washing liquid color properties were also tested in order to determine if any colorant had washed off into the liquid. This was also done using the XRite Color i7 machine. In all cases, the ΔE was below 1.00, indicating no detectable colorant washed off the fabrics. This demonstrates that the inks bind very well to all the fabrics.

**Table 1: ΔE Values of Ex. 1E Cyan digitally printed and dried on various fabrics. ΔE values (ink films) indicates color change of the fabrics before and after washing liquid immersion; ΔE (wash solution) indicates color change of the wash solution after the prints were immersed.**

| Example | Substrate | Drop spacing (µm) | ΔE (ink films) | ΔE (wash solution) |
|---|---|---|---|---|
| | 100% cotton | 31 | 0.39 | 0.69 |
| | | 40 | 0.90 | |
| | 65% PE 35% cotton | 31 | 2.25 | 0.37 |
| Ex. 1E Cyan | | 40 | 1.80 | |
| | Polyester Brook FKPD8 (PE) | 31 | 1.35 | 0.07 |
| | | 40 | 1.45 | |
| | PVC wallpaper | 31 | 1.30 | 0.13 |
| | | 40 | 1.30 | |

As can be seen in Table 1, ΔE values of the cured digital ink films and washing liquid before and after submersion are all below the preferred maximum of 3.00. ΔE values of the wash solution are all below 1.00. The ΔE figures are indicative of good binding between ink and substrate.

**Table 2: ΔE Values of Ex. 1E Cyan drawdowns dried and immersed in washing liquid. ΔE values (ink films) indicates color change of the drawdowns before and after washing liquid immersion; ΔE (wash solution) indicates color change of the wash solution after the prints were immersed.**

| Example | Substrate | ΔE (ink films) | ΔE (wash solution) |
|---|---|---|---|
| | 100% cotton | 2.11 | 0.58 |
| Ex. 1E Cyan | 65% PE 35% cotton | 2.04 | 0.43 |
| | Polyester Brook FKPD8 (PE) | 1.21 | 0.32 |
| | PVC wallpaper | 1.30 | 0.17 |

As can be seen in Table 2, ΔE values of the drawdowns are all below the preferred maximum of 3.00. ΔE values of the wash solution are all below 1.00. The ΔE figures are indicative of good binding between ink and substrate.

**Table 3: ΔE Values of Ex. 2C Magenta digitally printed and dried on various fabrics. ΔE values (ink films) indicates color change of the fabrics before and after washing liquid immersion; ΔE (wash solution) indicates color change of the wash solution after the prints were immersed.**

| Example | Substrate | Drop spacing (µm) | ΔE (ink films) | ΔE (wash solution) |
|---|---|---|---|---|
| | 100% cotton | 31 | 1.72 | 0.29 |
| | | 40 | 1.61 | |
| | 65% PE 35% cotton | 31 | 2.02 | 0.43 |
| Ex. 2C Magenta | | 40 | 1.77 | |
| | Polyester Brook FKPD8 (PE) | 31 | 1.65 | 0.25 |
| | | 40 | 1.20 | |
| | PVC wallpaper | 31 | 0.57 | 0.22 |
| | | 40 | 0.86 | |

As can be seen in Table 3, ΔE values of the cured digital ink films and washing liquid before and after submersion are all below the preferred maximum of 3.00. ΔE values of the wash solution are all below 1.00. The ΔE figures are indicative of good binding between ink and substrate.

**Table 4: ΔE Values of Ex. 2C Magenta drawdowns dried and immersed in washing liquid. ΔE values (ink films) indicates color change of the drawdowns before and after washing liquid immersion; ΔE (wash solution) indicates color change of the wash solution after the prints were immersed.**

| Example | Substrate | ΔE (ink films) | ΔE (wash solution) |
|---|---|---|---|
| Ex. 2C Magenta | 100% cotton | 2.66 | 0.60 |
| | 65% PE 35% cotton | 1.89 | 0.63 |
| | Polyester Brook FKPD8 (PE) | 1.76 | 0.27 |
| | PVC wallpaper | 1.60 | 0.45 |

As can be seen in Table 4, ΔE values of the drawdowns are all below the preferred maximum of 3.00. ΔE values of the wash solution are all below 1.00. The ΔE figures are indicative of good binding between ink and substrate.

**Table 5: ΔE Values of Ex. 3C Yellow digitally printed and dried on various fabrics. ΔE values (ink films) indicates color change of the fabrics before and after washing liquid immersion; ΔE (wash solution) indicates color change of the wash solution after the prints were immersed.**

| Example | Substrate | Drop spacing (µm) | ΔE (ink films) | ΔE (wash solution) |
|---|---|---|---|---|
| | 100% cotton | 31 | 1.01 | 0.53 |
| | | 40 | 0.38 | |
| | 65% PE 35% cotton | 31 | 2.03 | 0.60 |
| Ex. 3C Yellow | | 40 | 0.47 | |
| | Polyester Brook FKPD8 (PE) | 31 | 1.29 | 0.63 |
| | | 40 | 0.91 | |
| | PVC wallpaper | 31 | 1.13 | 0.17 |
| | | 40 | 0.80 | |

As can be seen in Table 5, ΔE values of the cured digital ink films and washing liquid before and after submersion are all below the preferred maximum of 3.00. ΔE values of the wash solution are all below 1.00. The ΔE figures are indicative of good binding between ink and substrate.

**Table 6: ΔE Values of Ex. 3C Yellow drawdowns dried and immersed in washing liquid. ΔE values (ink films) indicates color change of the drawdowns before and after washing liquid immersion; ΔE (wash solution) indicates color change of the wash solution after the prints were immersed.**

| Example | Substrate | ΔE (ink films) | ΔE (wash solution) |
|---|---|---|---|
| Ex. 3C Yellow | 100% cotton | 3.76 | 0.73 |
| | 65% PE 35% cotton | 0.87 | 0.57 |
| | Polyester Brook FKPD8 (PE) | 2.56 | 0.21 |
| | PVC wallpaper | 1.16 | 0.20 |

As can be seen in Table 6, ΔE values of the drawdowns are all below the preferred maximum of 3.00, with one exception - 3.76 for 100% cotton, but still considered a pass. ΔE values of the wash solution are all below 1.00. The ΔE figures are indicative of good binding between ink and substrate.

**Table 7: ΔE Values of Ex. 4C Black digitally printed and dried on various fabrics. ΔE values (ink films) indicates color change of the fabrics before and after washing liquid immersion; ΔE (wash solution) indicates color change of the wash solution after the prints were immersed.**

| Example | Substrate | Drop spacing (µm) | ΔE (ink films) | ΔE (wash solution) |
|---|---|---|---|---|
| | 100% cotton | 31 | 0.70 | 0.37 |
| | | 40 | 0.07 | |
| | 65% PE 35% cotton | 31 | 0.81 | 0.17 |
| Ex. 4C Black | | 40 | 0.56 | |
| | Polyester Brook FKPD8 (PE) | 31 | 0.74 | 0.31 |
| | | 40 | 0.47 | |
| | PVC wallpaper | 31 | 2.89 | 0.49 |
| | | 40 | 0.95 | |

As can be seen in Table 7, ΔE values of the cured digital ink films and washing liquid before and after submersion are all below the preferred maximum of 3.00. ΔE values of the wash solution are all below 1.00. The ΔE figures are indicative of good binding between ink and substrate.

**Table 8: ΔE Values of Ex. 3C Black drawdowns dried and immersed in washing liquid. ΔE values (ink films) indicates color change of the drawdowns before and after washing liquid immersion; ΔE (wash solution) indicates color change of the wash solution after the prints were immersed.**

| Example | Substrate | ΔE (ink films) | ΔE (wash solution) |
|---|---|---|---|
| Ex. 4C Black | 100% cotton | 1.06 | 1.20 |
| | 65% PE 35% cotton | 0.68 | 0.74 |
| | Polyester Brook FKPD8 (PE) | 1.88 | 0.31 |
| | PVC wallpaper | 1.04 | 0.22 |

As can be seen in Table 8, ΔE values of the drawdowns are all below the preferred maximum of 3.00. ΔE values of the wash solution are all below 1.00. The ΔE figures are indicative of good binding between ink and substrate.

## Claims

1. A method of printing an image on a fibrous substrate by inkjet printing, wherein the method comprises applying a water-based ink composition onto the substrate, wherein the ink composition comprises a carboxylic acid functional co-polymer having an acid number of ≥ 225 mg KOH/g, a pigment, water and at least one organic co-solvent, wherein the carboxylic acid functional co-polymer is a poly(styrene-maleic acid) co-polymer and/or a poly(styrene-maleamic acid) co-polymer, and wherein the fibrous substrate is a textile.

2. The method according to claim 1 wherein, after applying the ink composition onto the substrate, the method comprises fixing the ink composition onto the substrate using NIR radiation or thermal curing.

3. Use of a water-based ink composition for printing an image on a fibrous substrate by inkjet printing, wherein the ink composition comprises a carboxylic acid functional co-polymer having an acid number of ≥ 225 mg KOH/g, a pigment, water and at least one organic co-solvent, wherein the carboxylic acid functional co-polymer is a poly(styrene-maleic acid) co-polymer and/or a poly(styrene-maleamic acid) co-polymer and wherein the fibrous substrate is a textile.

4. Method or use according to any previous claim, wherein the ink is suitable for deposition through at least a single nozzle.

5. Method or use according to claim 1 wherein the carboxylic acid functional co-polymer is a poly(styrene-maleic acid) co-polymer.

6. Method or use according to claim 1 wherein the carboxylic acid functional co-polymer is a poly(styrene-maleamic acid) co-polymer.

7. Method or use according to any preceding claim wherein:
(a) the only co-polymer(s) in the ink composition is a poly(styrene-maleic acid) co-polymer and/or a poly(styrene-maleamic acid) co-polymer;
(b) the ink composition does not comprise a second polymer type;
(c) the ink composition does not comprise a polyurethane or a cross-linker, preferably wherein the ink composition does not comprise a polyurethane;
(d) the carboxylic acid functional co-polymer has a molecular weight of ≥ 3,000 Daltons, preferable > 3,500 Daltons or wherein the carboxylic acid functional co-polymer has a molecular weight of 3,000-20,000 Daltons, preferably 3,500-15,000 Daltons; and/or
(e) the carboxylic acid functional co-polymer has an acid value in the range of 225-600mg KOH/g, more preferably 225-500mg KOH/g and even more preferably 250-450mg KOH/g.

8. Method or use according to any of claims 1 or 5-7, wherein the poly(styrene-maleic acid) co-polymer and/or a poly(styrene-maleamic acid) co-polymer has an acid value in the range of 225-600mg KOH/g, more preferably 225-500mg KOH/g and even more preferably 250-450mg KOH/g.

9. Method or use according to any preceding claim, wherein the carboxylic acid functional co-polymer is a salt and the counter-ion is selected from the group containing lithium, sodium, potassium, ammonium and quaternary ammonium salt of an organic amine; preferably wherein the carboxylic acid functional co-polymer is a mono-sodium salt, a di-sodium salt, a mono-ammonium salt, a di-ammonium salt, a mono-quaternary ammonium salt of an organic amine or a di-quaternary ammonium salt of an organic amine.

10. Method or use according to claim 9, wherein:
(a) the quaternary ammonium salt of an organic amine is selected from the group consisting of primary, secondary and tertiary aliphatic amines, hydroxyl-amines, alkoxyl amines, and combinations thereof, preferably wherein the organic amine is a hydroxyl amine, preferably aminoethyl propanol or dimethylethanolamine;
(b) the carboxylic acid functional co-polymer is a mono- or di-sodium salt, preferably a di-sodium salt of poly(styrene-maleic acid) co-polymer;
(c) wherein the carboxylic acid functional co-polymer is a mono-ammonium salt of poly(styrene-maleamic acid) co-polymer; or
(d) wherein the carboxylic acid functional co-polymer is mono-quaternary ammonium salt, preferably a mono-quaternary ammonium salt of poly(styrene-maleamic acid) co-polymer wherein the mono-quaternary ammonium salt is a quaternary ammonium salt of aminoethyl propanol.

11. Method or use according to any preceding claim wherein:
(a) the composition comprises pigment particles which are at least Dv50 100-500nm in diameter, more preferably 100-350nm and even more preferably 100-250nm;
(b) the composition comprises 0.1-7.5 wt% of a pigment, 0.1-20 wt% of a carboxylic acid functional co-polymer, 2-30 wt% of an organic solvent and the remainder of the formulation deionised water;
(c) the composition comprises 0.1-7.5 wt% of a pigment, 0.1-20 wt% of a poly(styrene-maleic acid) co-polymer or a poly(styrene-maleamic acid) co-polymer, 2-30 wt% of an organic solvent and the remainder of the formulation deionised water;
(d) a dispersion of a pigment powder is prepared initially using the carboxylic acid functional co-polymer as dispersant and surfactant, preferably wherein a dispersion of a pigment powder is prepared initially using a poly(styrene-maleic acid) co-polymer or poly(styrene maleamic acid) co-polymer as dispersant and surfactant; and/or
(e) the pH of the ink is 7.0-10.5, more preferably 7.5-9.0 and even more preferably 7.9-8.5.

12. Method or use according to any preceding claim, wherein:
(a) the composition has a static surface tension of <40 dyne/cm at 0.025 Hz, more preferably <36 dyne/cm at 0.025 Hz and even more preferably <35 dyne/cm at 0.025 Hz;
(b) the composition has a dynamic surface tension of <47 dyne/cm at 2.7Hz, more preferably <42 dyne/cm at 2.7Hz and even more preferably <40 dyne/cm at 2.7Hz;
(c) the viscosity of the ink is > 4.0 cP, preferably greater than 5.0 cP (as measured at 25°C using a Brookfield DV-II+ Viscometer equipped with an Enhanced Brookfield UL Adapter at 60 rpm);
(d) the viscosity of the ink is 4-10 cP (as measured at 25°C using a Brookfield DV-II+ Viscometer equipped with an Enhanced Brookfield UL Adapter 60 rpm); and/or
(e) the carboxylic acid functional co-polymer functions as dispersant, surfactant and binder in the composition, preferably wherein the composition contains no other component(s) which perform the function of any one or more of dispersant, surfactant and binder.

13. Method or use according to any of claims 1-6, 7(c), 7(d), 7(e) or 8-12, wherein the composition further comprises at least one additional polymer; preferably wherein the at least one additional polymer is selected from the group consisting of polyvinyl alcohols, polyesters, polyestermelamines, styrene/acrylic acid copolymers, styrene/maleic acid/alkyl acrylate copolymers, styrene/methacrylic acid copolymers, styrene/methacrylic acid/alkyl acrylate copolymers, styrene/maleic half ester copolymers, vinyl naphthalene/acrylic acid copolymers, vinyl naphthalene/maleic acid copolymers, and salts thereof, and blends thereof.

14. Method or use according to any of claims 1-11, 12(a), 12(b), 12(c), 12(d) or 13 wherein the composition further comprises an additional surfactant; preferably wherein the additional surfactant is selected from the group consisting of anionic, cationic or neutral.

15. Method or use of any preceding claim further comprising a wetting agent, preferably a polyether siloxane co-polymer; and/or wherein the line speed of the printing press is between 50-600m/minute (linear), more preferably 100-400m/min and even more preferably 150-300m/min.

16. Method or use according to any preceding claim, wherein the fibrous substrate is a textile selected from the group consisting of cotton, rayon, silk, polyester, PET (Polyethylene terephthalate), viscose, nylon, polyamide, canvas, cashmere, chenille, chiffon, crepe, damask, georgette, gingham, jersey, lace, linen, polyvinyl chloride, leather, merino wool, modal, muslin, organza, wood, satin, spandex, suede, taffeta, toile, tweed, twill and velvet or wherein the fibrous substrate is a textile selected from the group consisting of cotton, polyester, PVC and blends thereof.

17. Method or use according to any preceding claim, wherein:
(a) the substrates do not contain a chemical primer or chemical pre-treatment layer;
(b) the substrates contain a chemical primer or chemical pre-treatment layer; or
(c) the ink is printed onto a base coat of a white or other coloured pigment or dye.

18. Method or use according to any preceding claim, wherein the printing ink is subsequently overprinted with a topcoat; optionally wherein:
(a) the ink is cured using a near infrared (NIR) lamp or infrared lamp;
(b) the ink is cured using a thermal method at between 30-250°C; or
(c) the ink is cured using an airflow method.

19. Method or use according to any preceding claim, comprising an inkjet printing head selected from the group consisting of thermal, drop-on-demand, continuous or MEMs.

20. A decorated substrate prepared by method of any of claims 1-19.

## Patentansprüche

1. Verfahren zum Drucken eines Bildes auf ein Fasersubstrat durch Tintenstrahldrucken, wobei das Verfahren Aufbringen einer Tintenzusammensetzung auf Wasserbasis auf das Substrat umfasst, wobei die Tintenzusammensetzung ein carbonsäurefunktionelles Copolymer mit einer Säurezahl von ≥ 225 mg KOH/g, ein Pigment, Wasser und wenigstens ein organisches Co-Lösungsmittel umfasst, wobei das carbonsäurefunktionelle Copolymer ein Poly(styrol-maleinsäure)-Copolymer und/oder ein Poly(styrol-maleinamidsäure)-Copolymer ist und wobei das Fasersubstrat ein Textilmaterial ist.

2. Verfahren nach Anspruch 1, wobei das Verfahren nach Aufbringen der Tintenzusammensetzung auf das Substrat Fixieren der Tintenzusammensetzung auf dem Substrat unter Verwendung von NIR-Strahlung oder thermischem Härten umfasst.

3. Verwendung einer Tintenzusammensetzung auf Wasserbasis zum Drucken eines Bildes auf ein Fasersubstrat durch Tintenstrahldruck, wobei die Tintenzusammensetzung ein carbonsäurefunktionelles Copolymer mit einer Säurezahl von ≥ 225 mg KOH/g, ein Pigment, Wasser und wenigstens ein organisches Copolymer umfasst, wobei das carbonsäurefunktionelle Copolymer ein Poly(styrol-maleinsäure)-Copolymer und/oder ein Poly(styrol-maleinamidsäure)-Copolymer ist und wobei das Fasersubstrat ein Textilmaterial ist.

4. Verfahren oder Verwendung nach einem der vorstehenden Ansprüche, wobei die Tinte zur Abgabe durch wenigstens eine einzelne Düse geeignet ist.

5. Verfahren oder Verwendung nach Anspruch 1, wobei das carbonsäurefunktionelle Copolymer ein Poly(styrol-maleinsäure)-Copolymer ist.

6. Verfahren oder Verwendung nach Anspruch 1, wobei das carbonsäurefunktionelle Copolymer ein Poly(styrol-maleinamidsäure)-Copolymer ist.

7. Verfahren zur Verwendung nach einem der vorstehenden Ansprüche, wobei:
(a) das einzigen Copolymer in der Tintenzusammensetzung ein Poly(styrol-maleinsäure)-Copolymer und/oder ein Poly(styrol-maleinamidsäure)-Copolymer ist;
(b) die Tintenzusammensetzung keinen zweiten Polymertyp umfasst;
(c) die Tintenzusammensetzung kein(en) Polyurethan oder Vernetzer umfasst, vorzugsweise wobei die Tintenzusammensetzung kein Polyurethan umfasst;
(d) das carbonsäurefunktionelle Copolymer ein Molekulargewicht von ≥ 3.000 Dalton, vorzugsweise ≥ 3.500 Dalton, aufweist oder wobei das carbonsäurefunktionelle Copolymer ein Molekulargewicht von 3.000-20.000 Dalton, vorzugsweise 3.500-15.000 Dalton, aufweist; und/oder
(e) das carbonsäurefunktionelle Copolymer eine Säurezahl in dem Bereich von 225-600 mg KOH/g, bevorzugter 225-500 mg KOH/g und noch bevorzugter 250 450 mg KOH/g aufweist.

8. Verfahren oder Verwendung nach einem der Ansprüche 1 oder 5-7, wobei das Poly(styrol-maleinsäure)-Copolymer und/oder Poly(styrol-maleinamidsäure)-Copolymer eine Säurezahl in dem Bereich von 225-600mg KOH/g, bevorzugter 225-500mg KOH/g und noch bevorzugter 250-450mg KOH/g aufweist.

9. Verfahren oder Verwendung nach einem der vorstehenden Ansprüche, wobei das carbonsäurefunktionelle Copolymer ein Salz ist und das Gegenion ausgewählt ist aus der Gruppe enthaltend Lithium-, Natrium-, Kalium-, Ammonium- und quartäres Ammoniumsalz eines organischen Amins; vorzugsweise wobei das carbonsäurefunktionelle Copolymer ein Mononatriumsalz, ein Dinatriumsalz, ein Monoammoniumsalz, ein Diammoniumsalz, ein monoquartäres Ammoniumsalz eines organischen Ammoniumamins oder ein diquartäres Ammoniumsalz eines organischen Amins ist.

10. Verfahren zur Verwendung nach Anspruch 9, wobei:
(a) das quartäre Ammoniumsalz eines organischen Amins ausgewählt ist aus der Gruppe bestehend aus primären, sekundären und tertiären aliphatischen Aminen, Hydroxylaminen, Alkoxylaminen und Kombinationen davon, vorzugsweise wobei das organische Amin ein Hydroxylamin ist, vorzugsweise Aminoethylpropanol oder Dimethylethanolamin;
(b) das carbonsäurefunktionelle Copolymer ein Mono- oder Dinatriumsalz ist, vorzugsweise ein Dinatriumsalz von Poly(styrol-maleinsäure)-Copolymer;
(c) wobei das carbonsäurefunktionelle Copolymer ein Monoammoniumsalz von Poly(styrol-maleinamidsäure)-Copolymer ist; oder
(d) wobei das carbonsäurefunktionelle Copolymer monoquartäres Ammoniumsalz ist, vorzugsweise ein monoquartäres Ammoniumsalz von Poly(styrol-maleinamidsäure)-Copolymer, wobei das monoquartäre Ammoniumsalz ein quartäres Ammoniumsalz von Aminoethylpropanol ist.

11. Verfahren zur Verwendung nach einem der vorstehenden Ansprüche, wobei:
(a) die Zusammensetzung Pigmentpartikel umfasst, die einen Durchmesser von wenigstens Dv50 100-500 nm, bevorzugter 100-350 nm und noch bevorzugter 100-250 nm, aufweisen;
(b) die Zusammensetzung 0,1-7,5 Gew.-% an einem Pigment, 0,1-20 Gew.-% an einem carbonsäurefunktionellen Copolymer, 2-30 Gew.-% an einem organischen Lösungsmittel und als Rest der Formulierung entionisiertes Wasser umfasst;
(c) die Zusammensetzung 0,1-7,5 Gew.-% an einem Pigment, 0,1-20 Gew.-% an einem Poly(styrol-maleinsäure)-Copolymer oder einem Poly(styrol-maleinamidsäure)-Copolymer, 2-30 Gew.-% an einem organischen Lösungsmittel und als Rest der Formulierung entionisiertes Wasser umfasst;
(d) eine Dispersion eines Pigmentpulvers zunächst unter Verwendung des carbonsäurefunktionellen Copolymers als Dispergiermittel und Tensid hergestellt wird, vorzugsweise wobei eine Dispersion eines Pigmentpulvers zunächst unter Verwendung eines Poly(styrol-maleinsäure)-Copolymers oder Poly(styrol-maleinamidsäure)-Copolymers als Dispergiermittel und Tensid hergestellt wird; und/oder
(e) der pH-Wert der Tinte 7,0-10,5, bevorzugter 7,5-9,0 und noch bevorzugter 7,9-8,5 beträgt.

12. Verfahren zur Verwendung nach einem der vorstehenden Ansprüche, wobei:
(a) die Zusammensetzung eine statische Oberflächenspannung von < 40 dyn/cm bei 0,025 Hz, bevorzugter < 36 dyn/cm bei 0,025 Hz und noch bevorzugter < 35 dyn/cm bei 0,025 Hz aufweist;
(b) die Zusammensetzung eine dynamische Oberflächenspannung von < 47 dyn/cm bei 2,7Hz, bevorzugter < 42 dyn/cm bei 2,7Hz und noch bevorzugter < 40 dyn/cm bei 2,7Hz aufweist;
(c) die Viskosität der Tinte > 4,0 cP, vorzugsweise mehr als 5,0 cP, beträgt (wie gemessen bei 25 °C unter Verwendung eines Brookfield-DV-II+-Viskosimeters, ausgestattet mit einem Enhanced Brookfield-UL-Adapter, bei 60 Upm);
(d) wobei die Viskosität der Tinte 4-10 cP beträgt (wie gemessen bei 25 °C unter Verwendung eines Brookfield-DV-II+-Viskosimeters, ausgestattet mit einem Enhanced Brookfield-UL-Adapter, bei 60 Upm);
(e) das carbonsäurefunktionelle Copolymer als Dispergiermittel, Tensid und Bindemittel in der Zusammensetzung fungiert, vorzugsweise wobei die Zusammensetzung keine andere(n) Komponente(en) enthält, die die Funktion eines oder mehrerer von Dispergiermittel, Tensid und Bindemittel erfüllen.

13. Verfahren oder Verwendung nach einem der Ansprüche 1-6, 7(c), 7(d), 7(e) oder 8-12, wobei die Zusammensetzung ferner wenigstens ein zusätzliches Polymer umfasst; vorzugsweise wobei das wenigstens eine zusätzliche Polymer ausgewählt ist aus der Gruppe bestehend aus Polyvinylalkoholen, Polyestern, Polyestermelaminen, Styrol/Acrylsäure-Copolymeren, Styrol/Maleinsäure/Alkylacrylat-Copolymeren, Styrol/Methacrylsäure-Copolymeren, Styrol/Methacrylsäure/Alkylacrylat-Copolymeren, Styrol/Maleinsäurehalbester-Copolymeren, Vinylnaphthalin/Acrylsäure-Copolymeren, Vinylnaphthalin/Maleinsäure-Copolymeren und Salzen davon und Gemischen davon.

14. Verfahren oder Verwendung nach einem der Ansprüche 1-11, 12(a), 12(b), 12(c), 12(d) oder 13, wobei die Zusammensetzung ferner ein zusätzliches Tensid umfasst; vorzugsweise wobei das zusätzliche Tensid ausgewählt ist aus der Gruppe bestehend aus anionisch, kationisch und neutral.

15. Verfahren oder Verwendung nach einem der vorstehenden Ansprüche, ferner umfassend ein Netzmittel, vorzugsweise ein Polyethersiloxan-Copolymer; und/oder wobei die Liniengeschwindigkeit der Druckpresse zwischen 50-600 m/Minute (linear), bevorzugter 100-400 m/min und noch bevorzugter 150-300 m/min beträgt.

16. Verfahren oder Verwendung nach einem der vorstehenden Ansprüche, wobei das Fasersubstrat ein Textilmaterial ausgewählt aus der Gruppe bestehend aus Baumwolle, Rayon, Seide, Polyester, PET (Polyethylenterephthalat), Viskose, Nylon, Polyamid, Leinwand, Kaschmir, Chenille, Chiffon, Krepp, Damast, Georgette, Gingham, Jersey, Spitze, Leinen, Polyvinylchlorid, Leder, Merinowolle, Modal, Musselin, Organza, Holz, Satin, Spandex, Veloursleder, Tafeta, Toile, Tweed, Twill und Samt ist oder wobei das Fasersubstrat ein Textilmaterial ausgewählt aus der Gruppe bestehend aus Baumwolle, Polyester, PVC und Gemischen davon ist.

17. Verfahren zur Verwendung nach einem der vorstehenden Ansprüche, wobei:
(a) die Substrate keine chemische Grundierung oder chemische Vorbehandlungsschicht enthalten;
(b) die Substrate eine chemische Grundierung oder chemische Vorbehandlungsschicht enthalten; oder
(c) die Tinte auf eine Grundschicht aus einem weißen oder andersfarbigen Pigment oder Farbstoff gedruckt wird.

18. Verfahren oder Verwendung nach einem der vorstehenden Ansprüche, wobei die Druckfarbe anschließend mit einer Deckschicht überdruckt wird; gegebenenfalls wobei:
(a) die Tinte unter Verwendung einer Nahinfrarot(NIR)-Lampe oder Infrarotlampe gehärtet wird;
(b) die Tinte unter Verwendung eines thermischen Verfahrens bei 30-250 °C gehärtet wird; oder
(c) die Tinte unter Verwendung eines Luftstromverfahrens gehärtet wird.

19. Verfahren oder Verwendung nach einem der vorstehenden Ansprüche, umfassend einen Tintenstrahldruckkopf ausgewählt aus der Gruppe bestehend aus thermisch, Drop-on-Demand, kontinuierlich und MEMs.

20. Dekoriertes Substrat, hergestellt durch ein Verfahren nach einem der Ansprüche 1-19.

## Revendications

1. Procédé d'impression d'une image sur un substrat fibreux par impression à jet d'encre, dans lequel le procédé comprend l'application d'une composition d'encre à base d'eau sur le substrat, dans lequel la composition d'encre comprend un copolymère à fonction acide carboxylique ayant un indice d'acide ≥ 225 mg KOH/g, un pigment, de l'eau et au moins un co-solvant organique, dans lequel le copolymère à fonction acide carboxylique est un copolymère poly(styrène-acide maléique) et/ou un copolymère poly(styrène-acide maléamique), et dans lequel le substrat fibreux est un textile.

2. Procédé selon la revendication 1, dans lequel, après application de la composition d'encre sur le substrat, le procédé comprend la fixation de la composition d'encre sur le substrat en utilisant un rayonnement NIR ou un durcissement thermique.

3. Utilisation d'une composition d'encre à base d'eau pour imprimer une image sur un substrat fibreux par impression à jet d'encre, dans laquelle la composition d'encre comprend un copolymère à fonction acide carboxylique ayant un indice d'acide ≥ 225 mg KOH/g, un pigment, de l'eau et au moins un co-solvant organique, dans laquelle le copolymère à fonction acide carboxylique est un copolymère poly(styrène-acide maléique) et/ou un copolymère poly(styrène-acide maléamique) et dans laquelle le substrat fibreux est un textile.

4. Procédé ou utilisation selon l'une quelconque des revendications précédentes, l'encre étant appropriée pour un dépôt à travers au moins une seule buse.

5. Procédé ou utilisation selon la revendication 1, le copolymère à fonction acide carboxylique étant un copolymère poly(styrène-acide maléique).

6. Procédé ou utilisation selon la revendication 1, le copolymère à fonction acide carboxylique étant un copolymère poly(styrène-acide maléamique).

7. Procédé ou utilisation selon une quelconque revendication précédente,
(a) le(s) seul(s) copolymère(s) dans la composition d'encre étant un copolymère poly(styrène-acide maléique) et/ou un copolymère poly(styrène-acide maléamique) ;
(b) la composition d'encre ne comprenant pas un second type de polymère ;
(c) la composition d'encre ne comprenant pas un polyuréthane ou un agent de réticulation, de préférence la composition d'encre ne comprenant pas un polyuréthane ;
(d) le copolymère à fonction acide carboxylique ayant un poids moléculaire de ≥ 3 000 Daltons, de préférence ≥ 3 500 Daltons ou le copolymère à fonction acide carboxylique ayant un poids moléculaire de 3 000 à 20 000 Daltons, de préférence de 3 500 à 15 000 Daltons ; et/ou
(e) le copolymère à fonction acide carboxylique a un indice d'acide dans la plage de 225 à 600 mg KOH/g, plus préférablement 225 à 500 mg KOH/g et encore plus préférablement 250 à 450 mg KOH/g.

8. Procédé ou utilisation selon l'une quelconque des revendications 1 ou 5 à 7, le copolymère poly(styrène-acide maléique) et/ou un copolymère poly(styrène-acide maléamique) ayant un indice d'acide dans la plage de 225 à 600 mg KOH/g, plus préférablement de 225 à 500 mg KOH/g et encore plus préférablement de 250 à 450 mg KOH/g.

9. Procédé ou utilisation selon l'une quelconque des revendications précédentes, le copolymère à fonction acide carboxylique étant un sel et le contre-ion étant choisi dans le groupe contenant un sel de lithium, de sodium, de potassium, d'ammonium et d'ammonium quaternaire d'une amine organique ; de préférence le copolymère à fonction acide carboxylique étant un sel monosodique, un sel disodique, un sel de monoammonium, un sel de di-ammonium, un sel de mono-ammonium quaternaire d'une amine organique ou un sel de di-ammonium quaternaire d'une amine organique.

10. Procédé ou utilisation selon la revendication 9,
(a) le sel d'ammonium quaternaire d'une amine organique étant choisi dans le groupe constitué par des amines aliphatiques primaires, secondaires et tertiaires des hydroxyl-amines, alcoxylamines et des combinaisons de celles-ci, de préférence dans laquelle l'amine organique est une hydroxylamine, de préférence l'aminoéthylpropanol ou la diméthyléthanolamine ;
(b) le copolymère à fonction acide carboxylique étant un sel mono- ou di-sodique, de préférence un sel di-sodique de copolymère poly(styrène-acide maléique) ;
(c) le copolymère à fonction acide carboxylique étant un sel de monoammonium de copolymère de poly(styrène-acide maléamique) ; ou
(d) le copolymère à fonction acide carboxylique étant un sel d'ammonium monoquaternaire, de préférence un sel d'ammonium monoquaternaire de copolymère de poly(styrène-acide maléamique), le sel d'ammonium monoquaternaire étant un sel d'ammonium quaternaire d'aminoéthylpropanol.

11. Procédé ou utilisation selon une quelconque revendication précédente,
(a) la composition comprenant des particules de pigment qui présentent au moins un diamètre Dv50 de 100 à 500 nm, plus préférablement de 100 à 350 nm et encore plus préférablement de 100 à 250 nm ;
(b) la composition comprend 0,1 à 7,5 % en poids d'un pigment, 0,1-20 % en poids d'un copolymère à fonction acide carboxylique, 2-30 % en poids d'un solvant organique et le reste étant de l'eau désionisée de formulation ;
(c) la composition comprend 0,1 à 7,5 % en poids d'un pigment, 0,1-20 % en poids d'un copolymère poly(styrène-acide maléique) ou d'un copolymère poly(styrène-acide maléamique), 2-30 % en poids d'un solvant organique et le reste étant de l'eau désionisée de formulation ;
(d) une dispersion d'une poudre de pigment étant préparée initialement en utilisant le copolymère à fonction acide carboxylique comme dispersant et tensioactif, de préférence une dispersion d'une poudre de pigment étant préparée initialement en utilisant un copolymère poly(styrène-acide maléique) ou un copolymère poly(styrène-acide maléamique) comme dispersant et tensioactif ; et/ou
(e) le pH de l'encre étant de 7,0 à 10,5, plus préférablement de 7,5 à 9,0 et encore plus préférablement de 7,9 à 8,5.

12. Procédé ou utilisation selon une quelconque revendication précédente,
(a) la composition ayant une tension superficielle statique < 40 dyne/cm à 0,025 Hz, plus préférablement < 36 dyne/cm à 0,025 Hz et encore plus préférablement < 35 dyne/cm à 0,025 Hz ;
(b) la composition ayant une tension superficielle dynamique < 47 dyne/cm à 2,7 Hz, plus préférablement < 42 dyne/cm à 2,7 Hz et encore plus préférablement < 40 dyne/cm à 2,7 Hz ;
(c) la viscosité de l'encre étant > 4,0 cP, de préférence supérieure à 5,0 cP (mesurée à 25 °C à l'aide d'un viscosimètre Brookfield DV-II+ équipé d'un adaptateur Brookfield UL amélioré à 60 tpm) ;
(d) la viscosité de l'encre étant de 4 à 10 cP (mesurée à 25 °C à l'aide d'un viscosimètre Brookfield DV-II+ équipé d'un adaptateur Brookfield UL amélioré à 60 tpm) ; et/ou
(e) le copolymère à fonction acide carboxylique fonctionnant comme dispersant, tensioactif et liant dans la composition, de préférence la composition ne contenant aucun autre(s) composant(s) remplissant la fonction d'un quelconque ou plusieurs parmi un dispersant, un tensioactif et un liant.

13. Procédé ou utilisation selon l'une quelconque des revendications 1-6, 7(c), 7(d), 7(e) ou 8-12, la composition comprenant en outre au moins un polymère supplémentaire ; de préférence, l'au moins un polymère supplémentaire étant choisi dans le groupe constitué par les poly(alcools vinyliques), les polyesters, les polyesters-mélamines, les copolymères styrène/acide acrylique, les copolymères styrène/acide maléique/acrylate d'alkyle, les copolymères styrène/acide méthacrylique, les copolymères styrène/acide méthacrylique/acrylate d'alkyle, les copolymères styrène/demi-ester maléique, les copolymères vinylnaphtalène/acide acrylique, les copolymères vinylnaphtalène/acide maléique, et leurs sels, et leurs mélanges.

14. Procédé ou utilisation selon l'une quelconque des revendications 1 à 11, 12(a), 12(b), 12(c), 12(d) ou 13, la composition comprenant en outre un tensioactif supplémentaire ; de préférence le tensioactif supplémentaire étant choisi dans le groupe constitué d'un tensioactif anionique, cationique ou neutre.

15. Procédé ou utilisation selon l'une quelconque des revendications précédentes, comprenant en outre un agent mouillant, de préférence un copolymère polyéther siloxane ; et/ou la vitesse de ligne de la presse d'impression étant comprise entre 50 et 600 m/minute (linéaire), plus préférablement 100 à 400 m/minute et encore plus préférablement 150 à 300 m/minute.

16. Procédé ou utilisation selon l'une quelconque des revendications précédentes, le substrat fibreux étant un textile choisi dans le groupe constitué par le coton, la rayonne, la soie, le polyester, le PET (poly(téréphtalate d'éthylène)), la viscose, le nylon, le polyamide, la toile, le cachemire, la chenille, la mousseline, le crêpe, le damas, la georgette, le vichy, le jersey, la dentelle, le lin, le poly(chlorure de vinyle), le cuir, la laine mérinos, le modal, la mousseline, l'organza, le bois, le satin, le spandex, le daim, le taffetas, la toile de Jouy, le tweed, le sergé et le velours ou le substrat fibreux étant un textile choisi parmi le groupe constitué par le coton, le polyester, le PVC et leurs mélanges.

17. Procédé ou utilisation selon une quelconque revendication précédente,
(a) les substrats ne contenant pas une couche d'apprêt chimique ou de prétraitement chimique ;
(b) les substrats contenant une couche d'apprêt chimique ou de prétraitement chimique ; ou
(c) l'encre étant imprimée sur une couche de base d'un pigment ou colorant blanc ou d'une autre couleur.

18. Procédé ou utilisation selon l'une quelconque des revendications précédentes, l'encre d'impression étant ensuite surimprimée par une couche de finition ; éventuellement :
(a) l'encre étant durcie au moyen d'une lampe proche infrarouge (NIR) ou d'une lampe infrarouge ;
(b) l'encre étant durcie au moyen d'un procédé thermique à une température comprise entre 30 et 250 °C ; ou
(c) l'encre étant durcie en utilisant un procédé de flux d'air.

19. Procédé ou utilisation selon l'une quelconque des revendications précédentes, comprenant une tête d'impression à jet d'encre choisie dans le groupe constitué par thermique, goutte à goutte à la demande, continue ou MEM.

20. Substrat décoré préparé par un procédé selon l'une quelconque des revendications 1 à 19.
